(19) Europäisches Patentamt / European Patent Office / Office européen des brevets

(11) EP 2 569 374 B1

(12) **EUROPEAN PATENT SPECIFICATION**

(45) Date of publication and mention of the grant of the patent:
**23.08.2017 Bulletin 2017/34**

(21) Application number: **11717141.3**

(22) Date of filing: **20.04.2011**

(51) Int Cl.:
***C08L 51/00*** *(2006.01)* ***C09J 151/00*** *(2006.01)*

(86) International application number:
**PCT/US2011/033238**

(87) International publication number:
**WO 2011/142947 (17.11.2011 Gazette 2011/46)**

(54) **ADHESION PROMOTER SYSTEM, AND METHOD OF PRODUCING THE SAME**

ADHÄSIONSPROMOTORSYSTEM UND VERFAHREN ZU IHRER HERSTELLUNG

SYSTÈME D'ACCÉLÉRATEUR D'ADHÉSION ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2010 US 332999 P**

(43) Date of publication of application:
**20.03.2013 Bulletin 2013/12**

(73) Proprietor: **Dow Global Technologies LLC**
**Midland, MI 48674 (US)**

(72) Inventors:
- **MALOTKY, David, L.**
  **Midland, MI 48640 (US)**
- **HOFMANN, Sandra**
  **CH-8840 Einsiedeln (CH)**
- **DIEHL, Charles, F.**
  **Durango, La Plata**
  **CO 81301 (US)**
- **READ, Michael, D.**
  **Midland, MI 48642 (US)**
- **BATISTINI, Antonio**
  **CH-8854 Wangen (CH)**
- **SILVIS, H. Craig**
  **Midland, MI 48642 (US)**
- **BETTE, Cristiano**
  **CH-8805 Richterswill (CH)**

(74) Representative: **Boult Wade Tennant**
**Verulam Gardens**
**70 Gray's Inn Road**
**London WC1X 8BT (GB)**

(56) References cited:
**WO-A1-2008/082936**
**WO-A2-02/38689**
**WO-A2-2008/079784**
**US-A1- 2005 124 753**
**US-A1- 2006 084 764**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 569 374 B1

## Description

### Field of Invention

The instant invention relates to an adhesion promoter system, and method of producing the same.

### Background of the Invention

Different techniques have been employed to facilitate the paintability of certain low surface energy plastic substrates such as thermoplastic polyolefins ("TPO"). Such techniques have, for example, largely been employed in the automotive industry such as automotive exterior painting applications, e.g. car bumpers, and automotive interior painting applications, e.g. instrument panels. Furthermore, there are a number of additional non-automotive applications, which require good adhesion of a topcoat to polypropylene substrates, for example, packaging applications, geotextiles applications, aquaculture, sporting goods, appliances, consumer electronics, furniture, marine, roofing membranes and toys.

Adhesion promoters can also be employed as a sizing agent for glass fibers used in producing glass fiber reinforced polypropylene or TPO or or to provide for adhesion between natural fibers and a PP or TPO substrate to enable reinforcement.

Typically, an adhesion promoter is employed to enhance the adhesion properties between different layers. Such adhesion layers may be applied as a separate layer, a formulated primer layer, or a blend component in a basecoat or primer formulation. The coatings applied can be solvent-based or waterborne; however, in the latter case, typically at least some surface activation treatment is required, for example, flame treatment, plasma treatment, or corona treatment. For solvent-based systems the key unmet needs is to provide for a low cost material with chlorine-free being regarded as a benefit.

Currently available waterborne options fail to provide adequate and acceptable water jet resistance as well as chemical resistance, particularly in the absence of surface activation treatment of the TPO or PP substrate. Furthermore, the currently available options fail to address concerns associated with chlorine containing adhesion promoter formulations.

Despite the research efforts in producing improved adhesion promoter formulation, there is still a need for a chlorine free adhesion promoter system with improved properties; and furthermore, there is still a need for a method for making such chlorine free adhesion promoter systems with improved properties at reduced costs. The adhesion promoter systems of the present invention provide chlorine free adhesion promoter systems with improved adhesion properties without interfering with other properties.

### Summary of the Invention

The instant invention is an adhesion promoter system, and method of producing the same. In one embodiment, the instant invention provides an adhesion promoter system comprising an aqueous dispersion comprising the melt kneading product of: at least 60 percent by weight of a first functionalized polyolefin, based on the total weight of the solid content, wherein the first functionalized polyolefin is an amine and/or hydroxyl functionalized polyolefin prepared via an in-situ melt reaction; optionally from 0.5 to less than 40 percent by weight of a second functionalized polyolefin, based on the total weight of the solid content, wherein said second functionalized polyolefin comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition; from 0.1 to less than 20 percent by weight of a stabilizing agent, based on the total weight of the solid content; and in the presence of water and optionally one or more neutralizing agents; and wherein said dispersion has an average particle size diameter in the range of from 0.05 to 5 pm, and a pH in the range of from 8 to 11.

In an alternative embodiment, the instant invention further provides a method for producing an adhesion promoter system comprising the steps of: selecting at least 60 percent by weight of a first functionalized polyolefin, based on the total weight of the solid content, wherein the first functionalized polyolefin is an amine and/or hydroxyl functionalized polyolefin prepared via an in-situ melt reaction; optionally selecting from 0.5 to less than 40 percent by weight of a second functionalized polyolefin, based on the total weight of the solid content, wherein said second functionalized polyolefin comprises homopolymers of propylene or copolymers of propylene with hexene, octene and/or other like alpha- olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition; optionally selecting from 0.1 to less than 20 percent by weight of a stabilizing agent based on the total weight of the solid content; melt kneading said first functionalized

polyolefin and optionally second functionalized polyolefin in the presence of said optional stabilizing agent, water and optionally one or more neutralizing agents; and thereby forming said adhesion promoter system; and wherein said dispersion has an average particle size diameter in the range of from 0.05 to 5 pm, and a pH in the range of from 8 to 11.

In another alternative embodiment, the instant invention further provides an adhesion layer comprising a film derived from the adhesion promoter system, as described hereinabove.

In another alternative embodiment, the instant invention further provides a multilayer structure comprising: (a) at least one or more substrate layers; (b) at least one or more adhesion layers, wherein said one or more adhesion layers comprise a film derived from the adhesion promoter system, as described hereinabove; (c) at least one or more outer layers; (d) wherein said adhesion layer is disposed therebetween said one or more substrate layers and said one or more outer layers.

In another alternative embodiment, the instant invention further provides a coating formulation comprising at least the adhesion promoter system, as described hereinabove.

In another alternative embodiment, the instant invention further provides a coating layer comprising a film derived from the coating formulation, as described hereinabove.

In another alternative embodiment, the instant invention further provides a multilayer structure comprising: (a) at least one or more substrate layers; (b) at least one or more coating layers comprising a film derived from the coating formulation, as described hereinabove; and (c) optionally one or more outer layers.

In another alternative embodiment, the instant invention further provides a process for making a multilayer structure comprising the steps: (1) selecting at least one or more substrate layers; (2) selecting the adhesion promoter system, as described hereinabove; (3) applying said adhesion promoter system to at least one surface of said substrate layer; (4) removing at least a portion of the water; (5) thereby forming an adhesion layer associated with said substrate layer; (6) forming at least one or more outer layers on said adhesion layer; and (7) thereby forming a multilayer structure.

In another alternative embodiment, the instant invention further provides a process for making a multilayer structure comprising the steps: (1) selecting at least one or more substrate layers; (2) selecting a coating formulation, as described hereinabove; (3) applying said coating formulation to at least one surface of said substrate layer; (4) removing at least a portion of the water; (5) thereby forming a coating layer associated with said substrate layer; (6) optionally forming one or more outer layers on said coating layer; and (7) thereby forming a multilayer structure.

In an alternative embodiment, the instant invention provides an adhesion promoter system, a method for producing an adhesion promoter system, a multilayer structure, an adhesion layer, and a process for making a multilayer structure, in accordance with any of the preceding embodiments, except that first functionalized polyolefin comprises a propylene/ethylene copolymer having a crystallinity in the range of from 1 percent by weight to 30 percent by weight, a heat of fusion in the range of from 2 Joules/gram to 50 Joules/gram, and a DSC melting point in the range of 25° C to 110° C.

In an alternative embodiment, the instant invention provides an adhesion promoter system, a method for producing an adhesion promoter system, a multilayer structure, an adhesion layer, and a process for making a multilayer structure, in accordance with any of the preceding embodiments, except that the adhesion promoter system further comprises one or more fillers, one or more binders, one or more pigments, one or more rheology modifying agents.

In an alternative embodiment, the instant invention provides an adhesion promoter system, a method for producing an adhesion promoter system, a multilayer structure, an adhesion layer, and a process for making a multilayer structure, in accordance with any of the preceding embodiments, except that second functionalized polyolefin is obtained by a process comprising (a) reacting a propylene/hexene copolymer having a terminal unsaturation with maleic anhydride in a mole ratio of 1:1 to produce terminally succinic anhydride functionalized propylene/hexene copolymer having a terminal succinic anhydride moiety and a single unsaturation, and then (b) reacting the terminally succinic anhydride functionalized propylene/hexene copolymer having a terminal succinic anhydride moiety and a single unsaturation with additional maleic anhydride in the presence of free radical initiation to produce said functionalized polymer composition, wherein said functionalized polymer composition has a succinic anhydride substitution in the range of from 5 to 45 weight percent, based on the weight of functionalized polymer composition.

## Detailed Description of the Invention

The instant invention is an adhesion promoter system, and method of producing the same.

In one embodiment, the instant invention provides an adhesion promoter system comprising an aqueous dispersion comprising the melt kneading product of: (a) at least 60 percent by weight of a first functionalized polyolefin , based on the total weight of the solid content; (b) optionally from 0.5 to less than 40 percent by weight of a second functionalized polyolefin , based on the total weight of the solid content, wherein said second functionalized polyolefin comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of 2nd functionalized polyolefin; (c) from 0.1 to less than 20 percent by weight of a

stabilizing agent, based on the total weight of the solid content; and (d) in the presence of water and optionally one or more neutralizing agents, for example, at a temperature in the range of 25°C to 200°C.

The adhesion promoter system may comprise at least 20 percent by weight of the dispersion, based on the weight of the adhesion promoter system. All individual values and subranges from at least 20 weight percent are included herein and disclosed herein; for example, the adhesion promoter system may comprise at least 30 percent by weight of the dispersion, based on the weight of the adhesion promoter system; or in the alternative, the adhesion promoter system may comprise at least 40 percent by weight of the dispersion, based on the weight of the adhesion promoter system; or in the alternative, the adhesion promoter system may comprise at least 50 percent by weight of the dispersion, based on the weight of the adhesion promoter system; or in the alternative, the adhesion promoter system may comprise at least 55 percent by weight of the dispersion, based on the weight of the adhesion promoter system; or in the alternative, the adhesion promoter system may comprise at least 65 percent by weight of the dispersion, based on the weight of the adhesion promoter system; or in the alternative, the adhesion promoter system may comprise at least 75 percent by weight of the dispersion, based on the weight of the adhesion promoter system.

The adhesion promoter system may further comprise one or more coalescing agents, wetting agents, thickeners, flow aids, pigments, resins, biocides, film forming aids, conductivity enhancers, or cross-linking systems. The adhesion promoter system may be applied to the surface of a substrate as a separate layer or it may be incorporated into a coating formulation.

The aqueous dispersion may comprise from at least 60 percent by weight of a first functionalized polyolefin, as described hereinbelow in further details, based on the total weight of the solid content. All individual values and subranges from at least 60 weight percent are included herein and disclosed herein; for example, the weight percent of the first functionalized polyolefin can be from a lower limit of 60, 70, 75, 80, 85, 90, or 95 weight percent to an upper limit of 70, 75, 80, 85, 90, 95 or 100 weight percent. For example, the aqueous dispersion may comprise from 60 to 95 percent, or 70 to 90 percent, or 75 to 95 percent, or 80 to 99 percent, or 85 to 99 percent, or 90 to 100 percent by weight of the first functionalized polyolefin, based on the total weight of the solid content.

The aqueous dispersion may optionally comprise from less 40 percent by weight of a second functionalized polyolefin, as described hereinbelow in further details, based on the total weight of the solid content. All individual values and subranges from less than 40 weight percent are included herein and disclosed herein; for example, the weight percent of the second functionalized polyolefin can be from a lower limit of 0, 5, 10, 15, 20, 30, or 35 weight percent to an upper limit of 5, 10, 15, 20, 30, or 40 weight percent. For example, the aqueous dispersion may comprise from 0 to 35 percent, or 0 to 30 percent, or 0 to 25 percent, or 0 to 15 percent, or 5 to 15 percent, or 0 to 10 percent by weight of the second functionalized polyolefin, based on the total weight of the solid content.

The aqueous dispersion may optionally comprise from less 50 percent by weight of a stabilizing agent, as described hereinbelow in further details, based on the total weight of the solid content. All individual values and subranges from less than 50 weight percent are included herein and disclosed herein; for example, the weight percent of the second functionalized polyolefin can be from a lower limit of 0, 0.1, 5, 10, 15, 20, 30, or 35 weight percent to an upper limit of 5, 10, 15, 20, 30, 40, or 50 weight percent. For example, the aqueous dispersion may comprise from 0 to 35 percent, or 0 to 30 percent, or 0 to 25 percent, or 0 to 15 percent, or 5 to 15 percent, or 0 to 10 percent by weight of the second functionalized polyolefin, based on the total weight of the solid content. In one embodiment, the second functionalized polyolefin is also the stabilizing agent.

The aqueous dispersion may comprise at least 5 percent by weight of solid content, excluding the weight of any filler, based on the total weight of the aqueous dispersion. All individual values and subranges of at least 5 weight percent are included herein and disclosed herein; for example, the weight percent can be from a lower limit of 5,10,20, 30, 40, 50, 55, 60, 65, 70, 75, or 80 weight percent to an upper limit of 45, 50, 55, 60, 65, 70, 75, 80 or 85 weight percent. For example, the aqueous dispersion may comprise at least 10 percent, or at least 20 percent, or at least 30 percent, or at least 40 percent, or at least 45 percent, or at least 50 percent, or at least 55 percent, or at least 60 percent, or at least 65 percent, or at least 70 percent by weight of solid content, excluding the weight of any filler, based on the total weight of the aqueous dispersion.

The aqueous dispersion may have an average particle size diameter in the range of less than 100 μm; for example, less than 50 μm; or in the alternative, less than 25 μm; or in the alternative from 0.05 to 25 μm; or in the alternative, from 0.05 to 10 μm; or in the alternative, from 0.05 to 5 μm.

The aqueous dispersion may have a pH in the range of less than 12; for example, from 7.5 to 11; or in the alternative, from 8 to 11; or in the alternative, from 8 to 10.

**(1) <u>First Functionalized Polyolefin</u>**

In one embodiment the first functionalized polyolefin may be an amine and/or hydroxyl functionalized polyolefin prepared via an *in-situ* melt reaction. In one another embodiment, the preparation of the functionalized polyolefin takes place in a batch reactor. In another embodiment, the preparation takes place in a reactive extrusion process. In the

alternative, the first functionalized polyolefin may be a polyolefin grafted with 2,2,6,6-tetramethylpiperidinyloxy nitroxide (TEMPO) and/or derivatives thereof such as 4-Hydroxy-TEMPO or 4-amino-TEMPO

The first functionalized polyolefin may be prepared via a process comprising the following steps:

A) grafting onto the backbone of a polyolefin at least one compound comprising at least one "amine-reactive" group to form a grafted polyolefin;
B) reacting a primary-secondary diamine with the grafted polyolefin; and

wherein step B) takes place subsequent to step A), without the isolation of the grafted polyolefin, and wherein both steps A) and B) take place in a melt reaction.

In an alternative embodiment, the primary-secondary diamine is selected from the group consisting of N-ethylethylenediamine, N-phenylethylenediamine, N-phenyl-1,2-phenylenediamine, N-phenyl-1,4-phenylenediamine, or 4-(aminomethyl)piperidine, or 1,2-diamino-2-methyl-propane.

In one embodiment, both steps A and B take place in a batch reactor.

In another embodiment, both steps A and B take place in a Brabender mixer, a Buss mixer or a Farrel mixer.

In another embodiment, step A takes place in an extruder, and step B takes place in a gear pump.

In another embodiment, step A takes place in an extruder, and step B takes place in a batch mixer. In a further embodiment, the batch mixer is of commercial dimensions. In another embodiment, the batch mixer is of lab scale or pilot plant dimensions.

In another embodiment, step A takes place in an extruder, and step B takes place in a separate extruder.

In another embodiment, there is no purification step between steps A and B.

In another embodiment, there is no venting of volatiles between steps A and B.

In another embodiment, the first functionalized polyolefin is produced via a process comprising the following steps:

A) grafting onto the backbone of a polyolefin at least one compound comprising at least one "amine-reactive" group to form a grafted polyolefin;
B) reacting a alkanolamine with the grafted polyolefin; and

wherein step B) takes place subsequent to step A), without the isolation of the grafted polyolefin, and wherein both steps A) and B) take place in a melt reaction.

In a preferred embodiment, the alkanolamine is selected from 2-aminoethanol, 2-amino-1-propanol, 3-amino-1-propanol, 2-amino-1-butanol, 2-(2-aminoethoxy)-ethanol or 2-aminobenzyl alcohol.

In one embodiment, both steps A and B take place in a batch reactor.

In another embodiment, both steps A and B take place in a Brabender mixer, a Busch mixer or a Farrel mixer.

In another embodiment, step A takes place in an extruder, and step B takes place in a gear pump.

In another embodiment, step A takes place in an extruder, and step B takes place in a batch mixer. In a further embodiment, the batch mixer is of commercial dimensions. In another embodiment, the batch mixer is of lab scale or pilot plant dimensions.

In another embodiment, step A takes place in an extruder, and step B takes place in a separate extruder.

In another embodiment, there is no purification step between steps A and B.

In another embodiment, there is no venting of volatiles between steps A and B.

In another embodiment, the first functionalized polyolefin is produced according to the process comprising the following steps:

A) grafting onto the backbone of a polyolefin at least one compound comprising at least one "amine-reactive" group to form a grafted polyolefin;
B) reacting a primary-secondary diamine or an alkanolamine with the grafted polyolefin; and

wherein step B) takes place subsequent to step A), without the isolation of the grafted polyolefin, and wherein both steps A) and B) take place in a melt reaction.

In an alternative embodiment, the primary-secondary diamine is selected from the group consisting of N-ethylethylenediamine, N-phenylethylenediamine, N-phenyl-1,2-phenylenediamine, N-phenyl-1,4-phenylenediamine, 2-diamino-2-methyl-propane or 4-(aminomethyl)piperidine, 1,2-diamino-2-methyl-propane.

In another alternative embodiment, the alkanolamine is selected from group consisting of 2-aminoethanol, 2-amino-1-propanol, 3-amino-1-propanol, 2-amino-1-butanol, 2-(2-aminoethoxy)-ethanol or 2-aminobenzyl alcohol.

In one embodiment, both steps A and B take place in a batch reactor.

In another embodiment, both steps A and B take place in a Brabender mixer, a Busch mixer or a Farrel mixer.

In another embodiment, step A takes place in an extruder, and step B takes place in a gear pump.
In another embodiment, step A takes place in an extruder, and step B takes place in a batch mixer. In a further embodiment, the batch mixer is of commercial dimensions. In another embodiment, the batch mixer is of lab scale or pilot plant dimensions.
In another embodiment, step A takes place in an extruder, and step B takes place in a separate extruder.
In another embodiment, there is no purification step between steps A and B.
In another embodiment, there is no venting of volatiles between steps A and B.
In another embodiment, the first functionalized polyolefin is an imide functionalized polyolefin prepared via a process comprising the following steps:

grafting onto the backbone of a polyolefin, in a melt reaction, at least one compound of the following formula (IV) to form a grafted polyolefin:

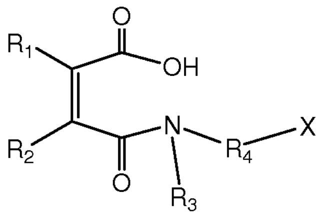

(IV),

and thermally treating the grafted polyolefin to form the imide functionalized polyolefin, and wherein R1 and R2 are, independently, either hydrogen or a C1-C20 hydrocarbyl radical, which is linear or branched; R3 is hydrogen or a C1-C20 hydrocarbyl radical, which is linear or branched; R4 is a hydrocarbyl di-radical, which is linear or branched; X is OH or $NHR_5$, where R5 is a hydrocarbyl radical, which is linear or branched, or a hydroxyethyl group.

In another embodiment, the first functionalized polyolefin is imide functionalized polyolefin produced via a process comprising the following steps:

A) functionalizing the polyolefin with at least one compound comprising at least one "amine-reactive" group to form a grafted polyolefin;
B) blending the grafted polyolefin, in a solid, non-molten form, with at least one primary-secondary diamine;
C) imbibing the primary-secondary diamine into the grafted polyolefin;
D) reacting the primary-secondary diamine with the grafted polyolefin to form an imide functionalized polyolefin.

In a further embodiment, the imbibing step takes place at room temperature. In another embodiment, the blending step takes place at room temperature.
In another embodiment of the invention, the polyolefin is an ethylene-based polymer. In another embodiment, the ethylene-based polymer is a random ethylene-based interpolymer, wherein one or more comonomers are randomly distributed within the polymer chains.
In another embodiment, the ethylene-base polymer is an ethylene/α-olefin interpolymer, and wherein the α-olefin is a $C_3$-$C_{20}$ α-olefin. In another embodiment, the α-olefin is randomly distributed within the polymer chains. In another embodiment, the α-olefin is selected from 1-propene, 1-butene, 1-hexene, and 1-octene, and mixtures thereof.
In another embodiment, the polyolefin is a propylene-based polymer. In another embodiment, the propylene-based polymer is a random propylene-based interpolymer, wherein one or more comonomers are randomly distributed within the polymer chains.
In another embodiment, the propylene-base polymer is a propylene/ethylene interpolymer or a propylene/α-olefin interpolymer, and wherein the α-olefin is a $C_4$-$C_{20}$ α-olefin. In another embodiment, the propylene-base polymer is a propylene/ethylene interpolymer. In another embodiment, the ethylene is randomly distributed within the polymer chains. In another embodiment, the propylene-base polymer is a propylene/α-olefin interpolymer, and wherein the α-olefin is a $C_4$-$C_{20}$ α-olefin. In another embodiment, the α-olefin is randomly distributed within the polymer chains. In another embodiment, the α-olefin is selected from 1-butene, 1-hexene or 1-octene.
The first functionalized polyolefin may be prepared via a combination of two or more embodiments as described herein.

### I. In-situ Functionalization Reactions using of a Grafted Polyolefin to Produce the First Functionalized Polyolefin

#### *a) Grafting Reactions*

The polyolefins disclosed herein may be modified by typical grafting, hydrogenation, nitrene insertion, epoxidation, or other modification reactions, well known to those skilled in the art. Preferred modifications are grafting reactions using a free radical mechanism, and more preferably, grafting reactions that result in the formation of "amine-reactive groups" and "hydroxyl-reactive groups." Such groups include, but are not limited to, anhydride groups, ester groups and carboxylic acid groups, and preferably the reactive group is an anhydride group.

Examples of reactive compounds that can be grafted onto the polymeric hydrocarbon backbone include ethylenically unsaturated carboxylic acids such as maleic acid, fumaric acid, itaconic acid, acrylic acid, methacrylic acid, and crotonic acid; acid anhydrides such as maleic anhydride and itaconic anhydride; vinyl benzyl halides such as vinyl benzyl chloride and vinyl benzyl bromide; alkyl acrylates and methacrylates such as methyl acrylate, ethyl acrylate, butyl acrylate, lauryl acrylate, methyl methacrylate, ethyl methacrylate, butyl methacrylate, and lauryl methacrylate; and ethylenically unsaturated oxiranes, such as glycidyl acrylate, glycidyl methacrylate, and glycidyl ethacrylate. Preferred ethylenically unsaturated amine-reactive compounds include maleic anhydride, acrylic acid, methacrylic acid, glycidyl acrylate, glycidyl methacrylate, with maleic anhydride being more preferred. Polypropylene grafted with maleic anhydride is a more preferred modified polymeric hydrocarbon.

With regard to the first functionalized polyolefin, the degree of incorporation or grafting of the reactive group is "application dependent," but is preferably not more than 10 weight percent, more preferably not more than 5 weight percent, more preferably not more than 2 weight percent, and most preferably not more than 1 weight percent; and preferably not less than 0.01 weight percent, more preferably not less than 0.1 weight percent, and most preferably not less than 0.2 weight percent, based on the weight of the grafting agent.

A thermal grafting process is one method for reaction; however, other grafting processes may be used, such as photo initiation, including different forms of radiation, e-beam, or redox radical generation. The functionalization may also occur at the terminal unsaturated group (e.g., vinyl group) or an internal unsaturation group, when such groups are present in the polymer.

In accordance with some embodiments, the polymers with unsaturation are functionalized, for example, with carboxylic acid producing moieties (preferably acid or anhydride moieties) selectively at sites of carbon-to-carbon unsaturation on the polymer chains, preferably in the presence of a free-radical initiator, to randomly attach carboxylic acid producing moieties, i.e., acid or anhydride or acid ester moieties, onto the polymer chains.

The amine-reactive group or hydroxyl-reactive group can be grafted to the polymer by any conventional method, typically in the presence of a free radical initiator, for example peroxides and azo compounds, or by ionizing radiation. Organic initiators are preferred, such as any one of the peroxide initiators, for example, dicumyl peroxide, di-tert-butyl peroxide, t-butyl perbenzoate, benzoyl peroxide, cumene hydroperoxide, t-butyl peroctoate, methyl ethyl ketone peroxide, 2,5-dimethyl-2,5-di(tert-butyl peroxy)hexane, lauryl peroxide, and tert-butyl peracetate, t-butyl $\alpha$-cumyl peroxide, di-t-butyl peroxide, di-t-amyl peroxide, t-amyl peroxybenzoate, 1,1-bis(t-butylperoxy)-3,3,5-trimethylcyclohexane, $\alpha,\alpha'$-bis(t-butylperoxy)-1,3-diisopropylbenzene, $\alpha,\alpha'$-bis(t-butylperoxy)-1,4-diisopropylbenzene, 2,5-bis(t-butylperoxy)-2,5-dimethylhexane, and 2,5-bis(t-butylperoxy)-2,5-dimethyl-3-hexyne. A suitable azo compound is azobisisobutyl nitrite.

The grafting reaction should be performed under conditions that maximize grafts onto the polyolefin backbone, and minimize side reactions, such as the homopolymerization of the grafting agent, which is not grafted to the polyolefin. The grafting reaction may be performed in the melt, in solution, in the solid-state, in a swollen-state, and is preferably performed in the melt. The grafting reaction may be performed in a wide-variety of equipment, such as, but not limited to, twin screw extruders, single screw extruders, Brabender mixers, and batch reactors.

Mixing the polyolefin with the grafting agent and initiator in the first stage of an extruder, at melt temperatures typically from 120°C to 260°C, preferably from 130°C to 250°C, produces sufficiently grafted polymers. All individual temperature values and ranges from 120°C to 260°C are included herein and disclosed herein.

#### *b) In-situ Amine Functionalization and In-situ Hydroxyl Functionalization*

The process to produce amino-functionalize or hydroxy-functionalize polyolefin can be carried out as one extrusion step, i.e. maleic anhydride can be grafted to the polyolefin in the first section of the extruder, followed by imidization with either a primary-secondary diamine or alkanolamine in the latter section before pelletization.

Alternatively, two extruders, or melt mixing devises could be operated in series to carry out both chemical steps.

In order to prepare an amino-functionalized polyolefin, without competing crosslinking reactions, in the melt, from anhydride-grafted polyolefin, it is necessary to employ a primary-secondary diamine of the general formula $H_2N$-R-NH-R", where R is at least a $C_2$ hydrocarbyl radical. The diamine can be used in a stoichiometric excess or stoichiometric equivalence.

Suitable primary-secondary diamines include compounds of structure (I) below:

$$H_2N\text{-}R_1\text{-}NH\text{-}R_2 \qquad (I)$$

In structure (I), $R_1$ is a divalent hydrocarbon radical, and preferably a linear hydrocarbon of the formula $-(CH_2)_n-$ , where n is greater than, or equal to, 2, and preferably n is from 2 to 10, more preferably from 2 to 8, and even more preferably from 2 to 6. $R_2$ is a monovalent hydrocarbon radical containing at least 2 carbon atoms, and optionally may be substituted with a heteroatom containing group, such as OH or SH. Preferably $R_2$ a linear hydrocarbon of the formula $-(CH_2)_n-CH_3$, where n is from 1 to ten, , and preferably n is from 1 to 9, more preferably from 1 to 7, and even more preferably from 1 to 5.

Additional primary-secondary diamines include, but are not limited to, N-ethylethylenediamine, N-phenylethylenediamine, N-phenyl-1,2-phenylenediamine, N-phenyl-1,4-phenylenediamine, and N-(2-hydroxyethyl)-ethylenediamine, 1,2-diamino-2-methyl-propane. Exemplary primary-secondary diamines are shown below.

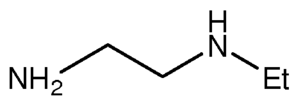

N-(ethyl)ethylenediamine ,

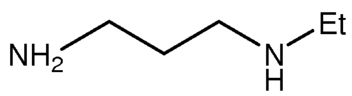

N-ethyl-1,3-propanediamine ,

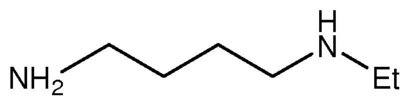

N-ethyl-1,4-butanediamine ,

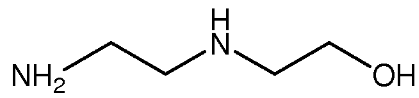

N-(2-hydroxyethyl)ethylenediamine ,

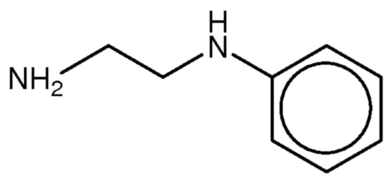

N-(phenyl)ethylenediamine , and

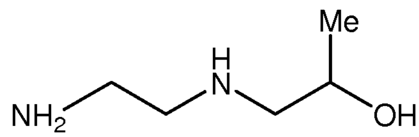

N-(2-hydroxypropyl)ethylenediamine .

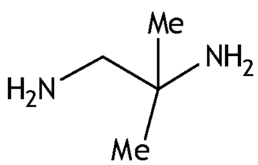

1,2-diamino-2-methyl-propane.

The alkanolamine is a compound containing an amine group and at least one hydroxyl group, preferably only one hydroxyl group. The amine can be a primary or a secondary amine, and is preferably a primary amine. The polyamine is a compound that contains at least two amine groups, preferably only two amine groups.

Suitable alkanolamines are those of structure (II) below:

$$H_2N\text{-}R_1\text{-}OH \qquad (II)$$

In structure (II), $R_1$ is a divalent hydrocarbon radical, and preferably a linear hydrocarbon of the formula $-(CH_2)_n-$, where n is greater than, or equal to, 2, and preferably n is from 2 to 10, more preferably from 2 to 8, and even more preferably from 2 to 6.

Additional alkanolamines include, but are not limited to, ethanolamine, 2-amine-1-propanol, 3-amino-1-propanol, 2-amino-1-butanol and 2-aminobenzyl alcohol.

Exemplary alkanolamines are shown below.

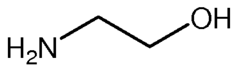

2-aminoethanol

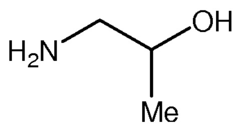

1-amino-2-hydroxypropane

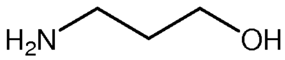

3-aminopropanol

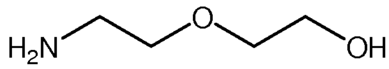

2-(2-aminoethoxy)ethanol

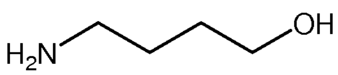

4-aminobutanol

Additional examples of suitable alkanolamines and suitable diamines, are represented by the following formula (III):

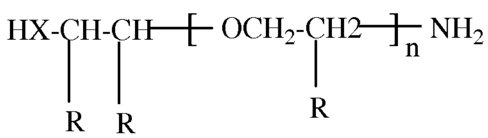

(III)

In formula (III), X is O, or X = NR' (R' = alkyl); and each R is independently H, $CH_3$, or $CH_2CH_3$; and n is from 0 to 50. The disclosure and preparation of hydroxyl amines can be found in U.S. Patent Nos. 3,231,619; 4,612,335; and 4,888,446. Exemplary alkanolamines include 2-aminoethanol, 1-amino-2-propanol, 2-amino-1-propanol, 3-amino-1-propanol, 2-(2-aminoethoxy)ethanol, 1-amino-2-butanol, 2-amino-3-butanol, and polyoxyalkylene glycol amines. An exemplary alkanolamine is 2-aminoethanol.

In one embodiment, a maleic anhydride polyolefin is functionalized with a primary-secondary diamine or with an alkanolamine.

In a further embodiment, the level of maleic anhydride used, is from 0.10 weight percent to 5.0 weight percent, preferably from 0.50 weight percent to 3.0 weight percent, and more preferably from 1.0 weight percent to 2.0 weight percent, based on the weight of the unfunctionalized grafted polyolefin.

In a further embodiment, the level of peroxide used, is from 0.01 weight percent to 0.5 weight percent, preferably from 0.05 weight percent to 0.3 weight percent, and more preferably from 0.1 weight percent to 0.2 weight percent, based on the weight of the unfunctionalized grafted polyolefin.

In yet a further embodiment, the level of primary-secondary diamine or alkanolamine used, is from 1 to 10 mole equivalents, preferably from 2 to 8 mole equivalents, and more preferably from 4 to 6 mole equivalents of amine, relative to grafted anhydride.

**II. In-situ Functionalization Reactions using Maleamic Acid to Produce the First Functionalized Polyolefin**

Hydroxy- and amino-functionalized polyolefin can also be prepared in one step by peroxide-initiated grafting of the corresponding maleamic acids, or derivative thereof, which is formed by reaction of maleic anhydride and alkanolamine or primary-secondary diamine.

Maleamic acids are shown in Structure (IV) below:

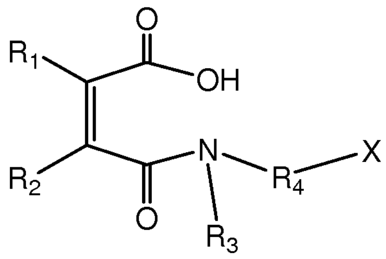

(IV)

In structure (IV), $R_1$ and $R_2$ are, independently, either hydrogen or a $C_1$-$C_{20}$ hydrocarbyl radical, which is linear or branched; $R_3$ is hydrogen or a $C_1$-$C_{20}$ hydrocarbyl radical, which is linear or branched; $R_4$ is a hydrocarbyl di-radical, which is linear or branched; X is OH or $NHR_5$, where $R_5$ is a hydrocarbyl radical, which linear or branched, or a hydroxyethyl group. In a preferred embodiment, $R_1$ and $R_2$ are, independently, either hydrogen, or a $C_1$-$C_{10}$, preferably a $C_1$-$C_8$, and more preferably a $C_1$-$C_6$, hydrocarbyl radical, which is linear or branched. In a preferred embodiment, $R_3$ is either hydrogen, or a $C_1$-$C_{10}$, preferably a $C_1$-$C_8$, and more preferably a $C_1$-$C_6$, hydrocarbyl radical, which is linear or branched. In a preferred embodiment, $R_4$ is a $C_1$-$C_{20}$, preferably a $C_1$-$C_{10}$, and more preferably a $C_1$-$C_8$, and even more preferably a $C_1$-$C_6$ hydrocarbyl radical, which is linear or branched.

In a preferred embodiment, $R_5$ is a $C_1$-$C_{20}$, preferably a $C_1$-$C_{10}$, and more preferably a $C_1$-$C_8$, and even more preferably a $C_1$-$C_6$ hydrocarbyl radical, which is linear or branched. In another embodiment, $R_5$ is a linear $-(CH_2)_n-CH_3$, where n is greater than, or equal to 1, and preferably n is from 1 to 9, more preferably from 1 to 7, and even more preferably from 1 to 5. Additional examples of $R_5$, include, but are not limited to, the following structures: $-CH_3$,$-CH_2CH_3$, $-CH_2CH_2CH_3$, $-CH_2CH_2CH_2CH_3$, $-CH_2(CH_3)CH_3$, $-CH_2(CH_3)CH_2CH_3$, $-CH_2CH_2(CH_3)CH_3$, $-CH_2(CH_3)CH_2CH_2CH_3$, $-CH_{2C}H_2(CH_3)CH_2CH_3$, and $-CH_2CH_2CH_2(CH_3)CH_3$.

Additional exemplary maleamic acid structures are shown below. In each structure, $R_3$ and $R_4$ are defined as above.

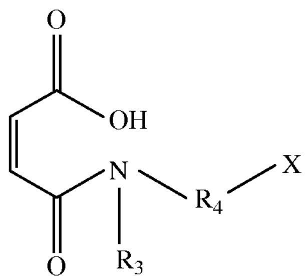

,

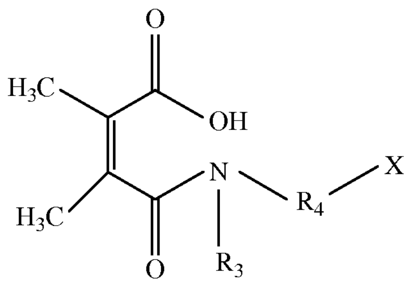

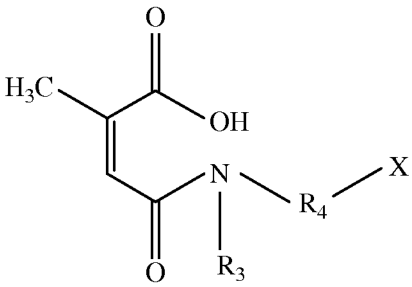

and

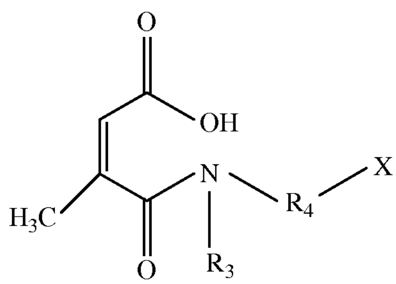

.

Preferably the maleamic acid, is shown in structures (V) and (V1) below:

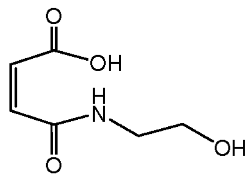
(V) and
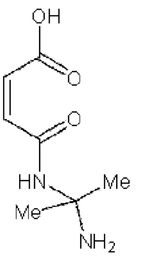
(VI)

The polyolefin is functionalized with a maleamic acid as shown in structures (V) or (VI). In one embodiment, the level of maleamic acid used, is from 0.10 weight percent to 5.0 weight percent, preferably from 0.50 weight percent to 3.0 weight percent, and more preferably from 1.0 weight percent to 2.0 weight percent, based on the weight of the unfunctionalized grafted polyolefin.

In a further embodiment, the level of peroxide used, is from 0.01 weight percent to 1 weight percent, preferably from 0.01 weight percent to 0.5 weight percent, and more preferably from 0.05 weight percent to 0.3 weight percent, and even more preferably from 0.1 weight percent to 0.2 weight percent, based on the amount of unfunctionalized grafted polyolefin.

**III. Diamine Imbibe Process to Produce the First Functionalized Polyolefin**

The polyolefins as described herein may also be functionalized using a diamine imbibing process. Here, a polyolefin is first functionalized with a group reactive with amine functionality. Preferably, the polyolefin is functionalized with an anhydride group. At least one diamine is mixed with the functionalized polyolefin at a temperature below the melting point of the polyolefin, and preferably at room temperature. The diamine is allowed to absorb or imbibe into the polyolefin, and reacts with diamine reactive group to form a succinamic acid. The reaction of the diamine with the diamine reactive functional group to form the imide ring, can then be completed by subjecting the mixture to a thermal treatment, such as in a melt extrusion process. Suitable diamines include those diamines discussed herein. The imbibing process helps to ensure that the diamine is thoroughly mixed with the polyolefin for an efficient functionalization reaction.

Suitable primary-secondary diamines include compounds of structure (VI) below:

$$H_2N\text{-}R_1\text{-}NH\text{-}R_2 \qquad \text{(VI)}$$

the

In structure (VI), $R_1$ is a divalent hydrocarbon radical, and preferably a linear hydrocarbon of the formula $-(CH_2)_n-$, where n is greater than, or equal to, 2, and preferably n is from 2 to 10, more preferably from 2 to 8, and even more preferably from 2 to 6. $R_2$ is a monovalent hydrocarbon radical containing at least 1 carbon atom, and optionally may be substituted with a heteroatom containing group, such as OH or SH. Preferably $R_2$ a linear hydrocarbon of the formula $-(CH_2)_n-CH_3$, where n is from 0 to ten, and preferably n is from 0 to 9, more preferably from 0 to 7, and even more preferably from 0 to 5.

Suitable primary-secondary diamines include, but are not limited to, N-methylethylenediamine, N-ethylethylenediamine, N-phenylethylenediamine, N-methyl-1,3-propanediamine, N-methylethylenediamine, N-phenyl-1,2-phenylenediamine, N-phenyl-1,4-phenylenediamine, 1-(2-aminoethyl)-piperazine, 2-diamino-2-methyl-propane and N-(2-hydroxyethyl)-ethylenediamine. Exemplary primary-secondary diamines are shown below.

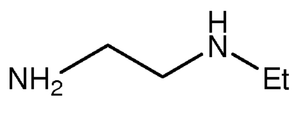
N-(ethyl)ethylenediamine ,

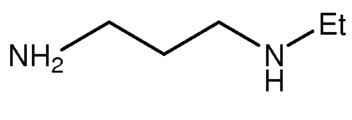
N-ethyl-1,3-propanediamine ,

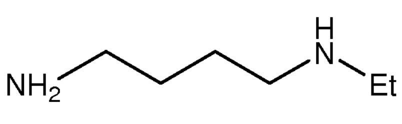
N-ethyl-1,4-butanediamine ,

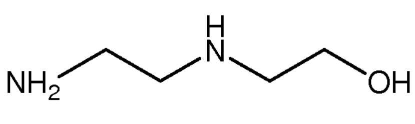
N-(2-hydroxyethyl)ethylenediamine ,

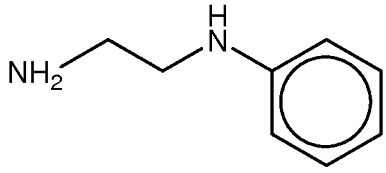

N-(phenyl)ethylenediamine ,

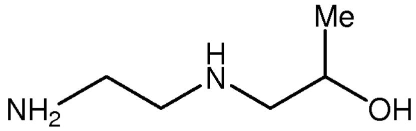

N-(2-hydroxypropyl)ethylenediamine ,

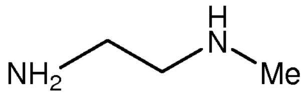

N-(methyl)ethylenediamine ,

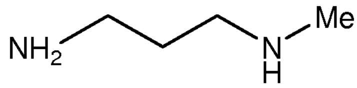

N-methyl-1,3-propanediamine ,

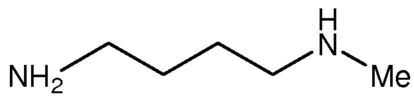

N-methyl-1,4-butanediamine , and

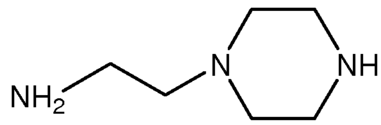

1-(2-aminoethyl)piperazine

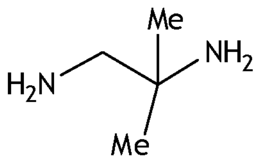

1,2-diamino-2-methyl-propane.

**IV. In-situ Functionalization Reactions using 2,2,6,6-tetramethylpiperidine-N-hydroxyl and derivatives thereof to Produce the First Functionalized Polyolefin**

Functionalized 2,2,6,6-tetramethylpiperidine-N-hydroxyl and/or derivatives thereof such as 4-Hydroxy-TEMPO or 4-amino-TEMPO may be used to prepare the first functionalized polyolefin via for example reactive melt blending equipment such as Banbury-type batch mixers, twin screw extruder's, single screw extruder, Buss-kneaders, twin screw continuous kneaders; or in the alternative, the reaction may take place in solution.

The functionalization reaction may be a one step process in the presence of peroxide, or in the alternative, the functionalization reaction process may comprise two or more steps. For example, in the first step, polymer is melt blended with functionalized 2,2,6,6-tetramethylpiperidine-N-hydroxyl and/or derivatives thereof such as 4-Hydroxy-TEMPO or 4-amino-TEMPO , and subsequently, in the 2nd step, additional functionalized 2,2,6,6-tetramethylpiperidine-N-hydroxyl and/or derivatives thereof such as 4-Hydroxy-TEMPO or 4-amino-TEMPO and peroxide are further melt blended into melt blended product of steps 1. Exemplary peroxides include, but are not limited to, organic peroxides such as a,a'-bis(t-butylperoxy)diisopropylbenzene, which is commercially available under the tradename Luperox F / Perkadox 14-40; 2,5-dimethyl-2,5-di(t-butylperoxy)hexane, which is commercially available under the tradename Luperox 101 / Trigonox 101; 2,5-dimethyl-2,5-di(t-butylperoxy)-3-hexyne, which is commercially available under the tradename Luperox 130 / Trigonox 145; and dicumyl peroxide, which is commercially available under the tradename Luperox DC.

**V. Polyolefin Polymers used as Base Polymer in the Grafting and Functionalization Reactions to Produce the First Functionalized Polyolefin**

Examples of polyolefins include high density polyethylene (HDPE), low density polyethylene (LDPE), linear low density polyethylene (LLDPE), linear ethylene/$\alpha$-olefin interpolymers, or substantially linear ethylene/$\alpha$-olefin interpolymers.

Suitable polyolefin also include polypropylene homopolymers and propylene copolymers, and other polyolefins, such as those formed from one or more $C_4$-$C_{20}$ alpha-olefins. The polyolefins may optionally contain copolymerizable conjugated dienes, non-conjugated dienes and/or vinyl monomers. Such polyolefins may be crystalline, partially crystalline or amorphous.

### *(a) Ethylene-base Polymers*

As discussed above, suitable ethylene-base polymers include, for example, high density polyethylene (HDPE), linear low density polyethylene (LLDPE), ultra low density polyethylene (ULDPE), homogeneously branched linear ethylene polymers, and homogeneously branched substantially linear ethylene polymers (that is homogeneously branched long chain branched ethylene polymers).

High density polyethylene (HDPE), useful as a polyolefin resin, typically has a density of about 0.94 to about 0.97 g/cc. Commercial examples of HDPE are readily available in the market. Other suitable ethylene polymers include low density polyethylene (LDPE), linear low density polyethylene (LLDPE), and linear very low density polyethylene (VLDPE). Typically the low density polyethylene (LDPE) is made under high-pressure, using free-radical polymerization conditions. Low density polyethylene typically has a density from 0.91 to 0.94 g/cc.

Linear low density polyethylene (LLDPE) is characterized by little, if any, long chain branching, in contrast to conventional LDPE. The processes for producing LLDPE are well known in the art and commercial grades of this polyolefin resin are available. Generally, LLDPE is produced in gas-phase fluidized bed reactors or liquid phase solution process reactors, using a Ziegler-Natta catalyst system.

The linear low density polyethylene (LLDPE), ultra low density polyethylene (ULDPE), homogeneously branched linear ethylene interpolymers, or homogeneously branched substantially linear ethylene interpolymer, typically have polymerized therein at least one $\alpha$-olefin. The term "interpolymer" used herein indicates the polymer can be a copolymer, a terpolymer or any polymer having more than one polymerized monomer. Monomers usefully copolymerized with ethylene to make the interpolymer include the $C_3$-$C_{20}$ $\alpha$-olefins, and especially propylene, 1-butene, 1-pentene, 1-hexene, 4- methyl-1-pentene, 1-heptene and 1-octene. Especially preferred comonomers include propylene, 1-butene, 1-hexene and 1-octene.

Overall, suitable ethylene polymers have a melt index, $I_2$, less than, or equal to, 1000 g/10 min, preferably less than, or equal to, 500 g/10 min, more preferably less than, or equal to, 100 g/10 min, most preferably less than, or equal to, 50 g/10 min, as measured in accordance with ASTM 1238, Condition 190°C/2.16 kg.

Commercial examples of suitable ethylene-base interpolymers include ATTANE™, AFFINITY™, DOWLEX™, ELITE™, all available from The Dow Chemical Company; and EXCEED™ and EXACT™ available from Exxon Chemical Company.

The terms "homogeneous" and "homogeneously-branched" are used in reference to an ethylene/$\alpha$-olefin interpolymer, in which the $\alpha$-olefin comonomer is randomly distributed within a given polymer molecule, and substantially all of the polymer molecules have the same ethylene-to-comonomer ratio. The homogeneously branched ethylene interpolymers that can be used in the practice of this invention include linear ethylene interpolymers, and substantially linear ethylene interpolymers.

Included amongst the homogeneously branched linear ethylene interpolymers are ethylene polymers, which lack long chain branching, but do have short chain branches, derived from the comonomer polymerized into the interpolymer, and which are homogeneously distributed, both within the same polymer chain, and between different polymer chains. That is, homogeneously branched linear ethylene interpolymers lack long chain branching, just as is the case for the linear low density polyethylene polymers or linear high density polyethylene polymers, made using uniform branching distribution polymerization processes, as described, for example, by Elston in U.S. Patent 3,645,992. Commercial examples of homogeneously branched linear ethylene/$\alpha$-olefin interpolymers include TAFMER™ polymers supplied by the Mitsui Chemical Company and EXACT™ polymers supplied by ExxonMobil Chemical Company.

The substantially linear ethylene interpolymers used in the present invention are described in U.S. Patent Nos. 5,272,236; 5,278,272; 6,054,544; 6,335,410 and 6,723,810. The substantially linear ethylene interpolymers are those in which the comonomer is randomly distributed within a given interpolymer molecule, and in which substantially all of the interpolymer molecules have the same ethylene/comonomer ratio within that interpolymer. In addition, the substantially linear ethylene interpolymers are homogeneously branched ethylene interpolymers having long chain branching. The long chain branches have the same comonomer distribution as the polymer backbone, and can have about the same length as the length of the polymer backbone. "Substantially linear," typically, is in reference to a polymer that is substituted, on average, with 0.01 long chain branches per 1000 total carbons (including both backbone and branch carbons) to 3 long chain branches per 1000 total carbons. The length of a long chain branch is longer than the carbon length of a short chain branch formed from the incorporation of one comonomer into the polymer backbone.

Some polymers may be substituted with 0.01 long chain branches per 1000 total carbons to 1 long chain branch per 1000 total carbons, or from 0.05 long chain branches per 1000 total carbons to 1 long chain branch per 1000 total carbons, or from 0.3 long chain branches per 1000 total carbons to 1 long chain branch per 1000 total carbons. Commercial examples of substantially linear polymers include the ENGAGE™ polymers and AFFINITY™ polymers (both available from The Dow Chemical Company).

The substantially linear ethylene interpolymers form a unique class of homogeneously branched ethylene polymers. They differ substantially from the well-known class of conventional, homogeneously branched linear ethylene

interpolymers, described by Elston in U.S. Patent 3,645,992, and, moreover, they are not in the same class as conventional heterogeneous Ziegler-Natta catalyst polymerized linear ethylene polymers (for example, ultra low density polyethylene (ULDPE), linear low density polyethylene (LLDPE) or high density polyethylene (HDPE) made, for example, using the technique disclosed by Anderson et al. in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

The homogeneously branched, substantially linear ethylene interpolymers useful in the invention have excellent processability, even though they have a relatively narrow molecular weight distribution. Surprisingly, the melt flow ratio ($I_{10}/I_2$), according to ASTM D 1238, of the substantially linear ethylene interpolymers can be varied widely, and essentially independently of the molecular weight distribution ($M_w/M_n$ or MWD). This surprising behavior is completely contrary to conventional homogeneously branched linear ethylene interpolymers, such as those described, for example, by Elston in U.S. 3,645,992, and heterogeneously branched conventional Ziegler-Natta polymerized linear polyethylene interpolymers, such as those described, for example, by Anderson et al., in U.S. 4,076,698. Unlike substantially linear ethylene interpolymers, linear ethylene interpolymers (whether homogeneously or heterogeneously branched) have rheological properties, such that, as the molecular weight distribution increases, the $I_{10}/I_2$ value also increases.

"Long chain branching (LCB)" can be determined by conventional techniques known in the industry, such as $^{13}C$ nuclear magnetic resonance ($^{13}CNMR$) spectroscopy, using, for example, the method of Randall (Rev. Micromole. Chem. Phys., C29 (2&3), p. 285-297). Two other methods are gel permeation chromatography, coupled with a low angle laser light scattering detector (GPC-LALLS), and gel permeation chromatography, coupled with a differential viscometer detector (GPC-DV). The use of these techniques for long chain branch detection, and the underlying theories, have been well documented in the literature. See, for example, Zimm, B.H. and Stockmayer, W.H., J. Chem. Phys.,17,1301(1949) and Rudin, A., Modern Methods of Polymer Characterization, John Wiley & Sons, New York (1991) pp. 103-112.

In contrast to "substantially linear ethylene polymer," "linear ethylene polymer" means that the polymer lacks measurable or demonstrable long chain branches, that is, the polymer is substituted with an average of less than 0.01 long chain branch per 1000 total carbons.

The homogeneous branched ethylene polymers useful in the present invention will preferably have a single melting peak, as measured using differential scanning calorimetry (DSC), in contrast to heterogeneously branched linear ethylene polymers, which have 2 or more melting peaks, due to the heterogeneously branched polymer's broad branching distribution.

Homogeneously branched linear ethylene interpolymers are a known class of polymers which have a linear polymer backbone, no measurable long chain branching and a narrow molecular weight distribution. Such polymers are interpolymers of ethylene and at least one α-olefin comonomer of from 3 to 20 carbon atoms, and are preferably copolymers of ethylene with a $C_3$-$C_{20}$ α-olefin, and are more preferably copolymers of ethylene with propylene, 1-butene, 1-pentene, 1-hexene, 1-heptene or 1-octene, and even more preferably, propylene, 1-butene, 1-hexene or 1-octene.

This class of polymers is disclosed for example, by Elston in US Patent No. 3,645,992, and subsequent processes to produce such polymers using metallocene catalysts have been developed, as shown, for example, in EP 0 129 368, EP 0 260 999, US Patent No. 4,701,432; US Patent No. 4,937,301; US Patent No. 4,935,397; US Patent No. 5,055,438; and WO 90/07526, and others. The polymers can be made by conventional polymerization processes (for example, gas phase, slurry, solution, and high pressure).

In a preferred embodiment of the invention, an ethylene-based interpolymer is used as the base polymer in the grafting reaction. In a further embodiment, the ethylene-based interpolymer is an ethylene/α-olefin interpolymer, comprising at least one α-olefin. In another embodiment, the interpolymer further comprises at least one diene.

In one embodiment, the ethylene/α-olefin interpolymer has a molecular weight distribution ($M_w/M_n$) less than, or equal to, 10, and preferably less than, or equal to, 5. More preferably the ethylene/α-olefin polymers have a molecular weight distribution from 1.1 to 5, and more preferably from about 1.5 to 4. All individual values and subranges from about 1 to 5 are included herein and disclosed herein.

Comonomers include, but are not limited to, propylene, isobutylene, 1-butene, 1-pentene, 1-hexene, 3-methyl-1-pentene, 4-methyl-1-pentene, and 1-octene, non-conjugated dienes, polyenes, butadienes, isoprenes, pentadienes, hexadienes (for example, 1,4-hexadiene), octadienes, styrene, halo-substituted styrene, alkyl-substituted styrene, tetrafluoroethylenes, vinylbenzocyclobutene, naphthenics, cycloalkenes (for example, cyclopentene, cyclohexene, cyclooctene), and mixtures thereof. Typically and preferably, the ethylene is copolymerized with one $C_3$-$C_{20}$ α-olefin. Preferred comonomers include propene, 1-butene, 1-pentene, 1-hexene, 1-heptene and 1-octene, and more preferably include propene, 1-butene, 1-hexene and 1-octene.

Illustrative α-olefins include propylene, 1-butene, 1-pentene, 1-hexene, 4-ethyl-1-pentene, 1-heptene, 1-octene, 1-nonene and 1-decene. The α-olefin is desirably a C3-C10 α-olefin. Preferably, the α-olefin is propylene, 1-butene, 1-hexene or 1-octene. Illustrative interpolymers include ethylene/propylene (EP) copolymers, ethylene/butene (EB) copolymers, ethylene/hexene (EH) copolymers, ethylene/octene (EO) copolymers, ethylene/α-olefin/diene modified

(EAODM) interpolymers, such as ethylene/propylene/diene modified (EPDM) interpolymers and ethylene/propylene/octene terpolymers. Preferred copolymers include EP, EB, EH and EO polymers.

Suitable diene and triene comonomers include 7-methyl-1,6-octadiene; 3,7-dimethyl-1, 6-octadiene; 5,7- dimethyl-1,6-octadiene; 3,7,11-trimethyl-1,6,10-octatriene; 6-methyl-1,5heptadiene; 1,3-butadiene; 1,6-heptadiene; 1,7-octadiene; 1,8-nonadiene; 1,9-decadiene; 1,10-undecadiene; norbornene; tetracyclododecene; or mixtures thereof; and preferably butadiene; hexadienes; and octadienes; and most preferably 1,4-hexadiene; 1,9-decadiene; 4-methyl-1,4-hexadiene; 5-methyl-1,4-hexadiene; dicyclopentadiene; and 5-ethylidene-2-norbornene (ENB).

Additional unsaturated comonomers include 1,3-butadiene, 1,3-pentadiene, norbornadiene, and dicyclopentadiene; C8-40 vinyl aromatic compounds including sytrene, o-, m-, and p-methylstyrene, divinylbenzene, vinylbiphenyl, vinylnapthalene; and halogen-substituted C8-40 vinyl aromatic compounds such as chlorostyrene and fluorostyrene.

In another embodiment, the ethylene/α-olefin interpolymer has a melt index ($I_2$) from 0.01 g/10 min to 1000 g/10 min, preferably from 0.01 g/10 min to 500 g/10 min, and more preferably from 0.01 g/10 min to 100 g/10 min, as determined using ASTM D-1238 (190°C, 2.16 kg load). All individual values and subranges from 0.01 g/10 min to 1000 g/10 min are includes herein and disclosed herein.

In another embodiment, the ethylene/α-olefin interpolymer has a percent crystallinity of less than, or equal to, 60 percent, preferably less than, or equal to, 50 percent, and more preferably less than, or equal to, 40 percent, as measured by DSC. Preferably, these polymers have a percent crystallinity from 2 percent to 60 percent, including all individual values and subranges from 2 percent to 60 percent. Such individual values and subranges are disclosed herein.

In another embodiment, the ethylene/α-olefin interpolymer has a density less than, or equal to, 0.93 g/cc, preferably less than, or equal to, 0.92 g/cc, and more preferably less than, or equal to, 0.91 g/cc. In another embodiment, the ethylene/α-olefin interpolymer has a density greater than, or equal to, 0.85 g/cc, preferably greater than, or equal to, 0.86 g/cc, and more preferably greater than, or equal to, 0.87 g/cc.

In another embodiment, the ethylene/α-olefin interpolymer has a density from 0.85 g/cm$^3$ to 0.93 g/cm$^3$, and preferably from 0.86 g/cm$^3$ to 0.92 g/cm$^3$, and more preferably from 0.87 g/cm$^3$ to 0.91 g/cm$^3$. All individual values and subranges from 0.85 g/cm$^3$ to 0.93 g/cm$^3$ are included herein and disclosed herein.

In another embodiment, the final functionalized ethylene/α-olefin interpolymer, containing an imide functionality, has a melt index ($I_2$) from 0.01 g/10 min to 1000 g/10 min, preferably from 0.01 g/10 min to 500 g/10 min, and more preferably from 0.01 g/10 min to 100 g/10 min, as determined using ASTM D-1238 (190°C, 2.16 kg load). All individual values and subranges from 0.01 g/10 min to 1000 g/10 min are includes herein and disclosed herein.

### *(b) Propylene-based Polymers*

The polypropylene base polymer may be a propylene/alpha-olefin copolymer. In one particular embodiment, the propylene/alpha-olefin copolymer is characterized as having substantially isotactic propylene sequences. "Substantially isotactic propylene sequences" means that the sequences have an isotactic triad (mm) measured by $^{13}$C NMR of greater than about 0.85; in the alternative, greater than about 0.90; in another alternative, greater than about 0.92; and in another alternative, greater than about 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by $^{13}$C NMR spectra.

The propylene/alpha-olefin copolymer may have a melt flow rate in the range of from 0.1 to 500 g/10 minutes, measured in accordance with ASTM D-1238 (at 230° C / 2.16 Kg). All individual values and subranges from 0.1 to 500 g/10 minutes are included herein and disclosed herein; for example, the melt flow rate can be from a lower limit of 0.1 g/10 minutes, 0.2 g/10 minutes, or 0.5 g/10 minutes to an upper limit of 500 g/10 minutes, 200 g/10 minutes, 100 g/10 minutes, or 25 g/10 minutes. For example, the propylene/alpha-olefin copolymer may have a melt flow rate in the range of 0.1 to 200 g/10 minutes; or in the alternative, the propylene/ alpha-olefin copolymer may have a melt flow rate in the range of 0.2 to 100 g/10 minutes; or in the alternative, the propylene/ alpha-olefin copolymer may have a melt flow rate in the range of 0.2 to 50 g/10 minutes; or in the alternative, the propylene/ alpha-olefin copolymer may have a melt flow rate in the range of 0.5 to 50 g/10 minutes; or in the alternative, the propylene/ alpha-olefin copolymer may have a melt flow rate in the range of 1 to 50 g/10 minutes; or in the alternative, the propylene/ alpha-olefin copolymer may have a melt flow rate in the range of 1 to 40 g/10 minutes; or in the alternative, the propylene/ alpha-olefin copolymer may have a melt flow rate in the range of 1 to 30 g/10 minutes.

The propylene/alpha-olefin copolymer has a crystallinity in the range of from at least 1 percent by weight (a heat of fusion of at least 2 Joules/gram) to 30 percent by weight (a heat of fusion of less than 50 Joules/gram). All individual values and subranges from 1 percent by weight (a heat of fusion of at least 2 Joules/gram) to 30 percent by weight (a heat of fusion of less than 50 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 30 percent by weight (a heat of fusion of less than 50 Joules/gram), 24 percent by weight (a heat of fusion of less than 40 Joules/gram),

15 percent by weight (a heat of fusion of less than 24.8 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 24 percent by weight (a heat of fusion of less than 40 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via DSC method, as described above. The propylene/alpha-olefin copolymer comprises units derived from propylene and polymeric units derived from one or more alpha-olefin comonomers. Exemplary comonomers utilized to manufacture the propylene/alpha-olefin copolymer are $C_2$, and $C_4$ to $C_{10}$ alpha-olefins; for example, $C_2$, $C_4$, $C_6$ and $C_8$ alpha-olefins.

The propylene/alpha-olefin copolymer comprises from 1 to 40 percent by weight of one or more alpha-olefin comonomers. All individual values and subranges from 1 to 40 weight percent are included herein and disclosed herein; for example, the comonomer content can be from a lower limit of 1 weight percent, 3 weight percent, 4 weight percent, 5 weight percent, 7 weight percent, or 9 weight percent to an upper limit of 40 weight percent, 35 weight percent, 30 weight percent, 27 weight percent, 20 weight percent, 15 weight percent, 12 weight percent, or 9 weight percent. For example, the propylene/alpha-olefin copolymer comprises from 1 to 35 percent by weight of one or more alpha-olefin comonomers; or in the alternative, the propylene/alpha-olefin copolymer comprises from 1 to 30 percent by weight of one or more alpha-olefin comonomers; or in the alternative, the propylene/alpha-olefin copolymer comprises from 3 to 27 percent by weight of one or more alpha-olefin comonomers; or in the alternative, the propylene/alpha-olefin copolymer comprises from 3 to 20 percent by weight of one or more alpha-olefin comonomers; or in the alternative, the propylene/alpha-olefin copolymer comprises from 3 to 15 percent by weight of one or more alpha-olefin comonomers.

The propylene/alpha-olefin copolymer has a molecular weight distribution (MWD), defined as weight average molecular weight divided by number average molecular weight ($M_w/M_n$) of 3.5 or less; in the alternative 3.0 or less; or in another alternative from 1.8 to 3.0.

Such propylene/alpha-olefin copolymers are further described in details in the U.S. Patent Nos. 6,960,635 and 6,525,157. Such propylene/alpha-olefin copolymers are commercially available from The Dow Chemical Company, under the tradename VERSIFY™, or from ExxonMobil Chemical Company, under the tradename VISTAMAXX™. In one embodiment, the propylene/alpha-olefin copolymers are further characterized as comprising (A) between 60 and less than 100, preferably between 80 and 99 and more preferably between 85 and 99, weight percent units derived from propylene, and (B) between greater than zero and 40, preferably between 1 and 20, more preferably between 4 and 16 and even more preferably between 4 and 15, weight percent units derived from at least one of ethylene and/or a $C_{4-10}$ $\alpha$-olefin; and containing an average of at least 0.001, preferably an average of at least 0.005 and more preferably an average of at least 0.01, long chain branches/1000 total carbons. The maximum number of long chain branches in the propylene/alpha-olefin copolymer is not critical, but typically it does not exceed 3 long chain branches/1000 total carbons. The term long chain branch, as used herein, refers to a chain length of at least one (1) carbon more than a short chain branch, and short chain branch, as used herein, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. Such propylene/alpha-olefin copolymers are further described in details in the U.S. Provisional Patent Application No. 60/988,999 and International Paten Application No. PCT/US08/082599.

**(c) *Olefin Block Copolymers***

In certain selected embodiments, olefin block copolymers, e.g., ethylene multi-block copolymer, such as those described in the International Publication No. WO2005/090427 and U.S. Patent Application Serial No. 11/376,835 may be used as the polyolefin. Such olefin block copolymer may be an ethylene/$\alpha$-olefin interpolymer:

(a) having a $M_w/M_n$ from about 1.7 to about 3.5, at least one melting point, $T_m$, in degrees Celsius, and a density, d, in grams/cubic centimeter, wherein the numerical values of $T_m$ and d corresponding to the relationship:

$$T_m > -2002.9 + 4538.5(d) - 2422.2(d)^2;$$

(b) having a $M_w/M_n$ from about 1.7 to about 3.5, and being characterized by a heat of fusion, $\Delta H$ in J/g, and a delta

quantity, $\Delta T$, in degrees Celsius defined as the temperature difference between the tallest DSC peak and the tallest CRYSTAF peak, wherein the numerical values of $\Delta T$ and $\Delta H$ having the following relationships:

$\Delta T > -0.1299(\Delta H) + 62.81$ for $\Delta H$ greater than zero and up to 130 J/g,
$\Delta T \geq 48°C$ for $\Delta H$ greater than 130 J/g,
wherein the CRYSTAF peak being determined using at least 5 percent of the cumulative polymer, and if less than 5 percent of the polymer having an identifiable CRYSTAF peak, then the CRYSTAF temperature being 30 °C; or

(c) being characterized by an elastic recovery, Re, in percent at 300 percent strain and 1 cycle measured with a compression-molded film of the ethylene/α-olefin interpolymer, and having a density, d, in grams/cubic centimeter, wherein the numerical values of Re and d satisfying the following relationship when ethylene/α-olefin interpolymer being substantially free of a cross-linked phase:

$$Re > 1481 - 1629(d);$$

or or

(d) having a molecular fraction which elutes between 40 °C and 130 °C when fractionated using TREF, characterized in that the fraction having a molar comonomer content of at least 5 percent higher than that of a comparable random ethylene interpolymer fraction eluting between the same temperatures, wherein said comparable random ethylene interpolymer having the same comonomer(s) and having a melt index, density, and molar comonomer content (based on the whole polymer) within 10 percent of that of the ethylene/α-olefin interpolymer; or

(e) having a storage modulus at 25 °C, G' (25 °C), and a storage modulus at 100 °C, G' (100 °C), wherein the ratio of G' (25 °C) to G' (100 °C) being in the range of about 1:1 to about 9:1.

The ethylene/α-olefin interpolymer may also:

(a) have a molecular fraction which elutes between 40 °C and 130 °C when fractionated using TREF, characterized in that the fraction having a block index of at least 0.5 and up to about 1 and a molecular weight distribution, $M_w/M_n$, greater than about 1.3; or

(b) have an average block index greater than zero and up to about 1.0 and a molecular weight distribution, $M_w/M_n$, greater than about 1.3.

***(d) Polyolefin Blends***

In another embodiment, a blend of two or more polyolefins is subject to functionalization reactions, such as a blend of an ethylene-base polymer, as discussed above, and a propylene-base polymer, as discussed above. In the alternative, one or more first functionalized polyolefins may further be blended and or compounded with one or more un-functionalized polymers, e.g. polyolefins as described above as base polymers.

**(e) Additional Reactions and/or Blends**

The amine functionalized polyolefin or hydroxyl functionalized polyolefin, as described above, may be reacted or blended with a second polymer by melt reaction, for example, in a Brabender mixer or an extruder. This may be conducted in the same reactor as the functionalization reaction, or subsequently, in another melt reactor. The reaction time and temperature will depend on the polymers present. Thus, for example, amine functionalized polypropylene (amino-PP) may be melt reacted/blended with a blend of styrene-maleic acid polymer in polypropylene.
Similarly, polyolefin blends containing a polyolefin, an aminated polyolefin and other polymer, such as an engineering thermoplastic that is reactive with, or otherwise compatible with, the aminated polyolefin, can be prepared having improved overall blend compatibility between the polyolefin, other polymer, and aminated polyolefin. In addition, the functionalized polyolefins or blends can be blended with one or more thermoplastic or thermosetting polymers.
Processing aids, such as plasticizers, can also be included in either the individual blend components or added to the final blend. These include, but are not limited to, the phthalates, such as dioctyl phthalate and diisobutyl phthalate,

natural oils such as lanolin, and paraffin, naphthenic and aromatic oils obtained from petroleum refining, and liquid resins from rosin or petroleum feedstocks. Exemplary classes of oils useful as processing aids include white mineral oil such as Kaydol™ oil (available from and a registered trademark of Witco) and Shellflex™ 371 naphthenic oil (available from and a registered trademark of Shell Oil Company). Another suitable oil is Tuflo™ oil (available from and a registered trademark of Lyondell).

**(f) Additives**

Typically polymers and resins used in the invention are treated with one or more stabilizers, for example, antioxidants, such as Irganox™ 1010 and Irgafos™ 168, both supplied by Ciba Specialty Chemicals. Polymers are typically treated with one or more stabilizers before an extrusion or other melt processes. Other polymeric additives include, but are not limited to, ultraviolet light absorbers, antistatic agents, pigments, dyes, nucleating agents, fillers, slip agents, fire retardants, plasticizers, processing aids, lubricants, stabilizers, smoke inhibitors, viscosity control agents and anti-blocking agents.

**(2) <u>Second Functionalized Polyolefin</u>**

The aqueous dispersion may optionally comprise from less than 40 percent by weight of the units derived from a second functionalized polyolefin, based on the total weight of the solid content; for example, less than 30 weight percent; or in the alternative, less than 20 weight percent; or in the alternative, less than 10 weight percent. The second functionalized polyolefin comprises a polypropylene i.e. homopolymers and copolymers of polypropylene and one or more alpha olefins such as ethylene, hexene, and octene, with high amounts of succinic anhydride attached which does not materially affect the physical properties of the polypropylene, and hydrolysis derivatives thereof.

A key to the method described herein is the use of succinic terminated polypropylene formed via the ene reaction onto vinylidene terminated polypropylene. This polypropylene is often, but not exclusively, prepared by metallocene catalysis. It has been discovered that grafting maleic anhydride onto this polymer does not result in significant chain scission or polymerization. In one non-limiting embodiment the method involves heating maleic anhydride in the presence of a polypropylene that has been formed using a metallocene catalyst in such a way that a single terminal vinylidene group results on each molecule. Most commonly these metallocene polymerizations are done in the presence of hydrogen (which speeds up the polymerization and lowers the molecular weight of the polymer) which results in polymer not having the terminal vinylidene group. These saturated polymers will not work in the inventive method, and thus the polymerization of propylene in the presence of a metallocene catalyst is preferably carried out in the presence of very little or no hydrogen or other transfer agents, such as triethylsilane.

The ene reaction is shown schematically below:

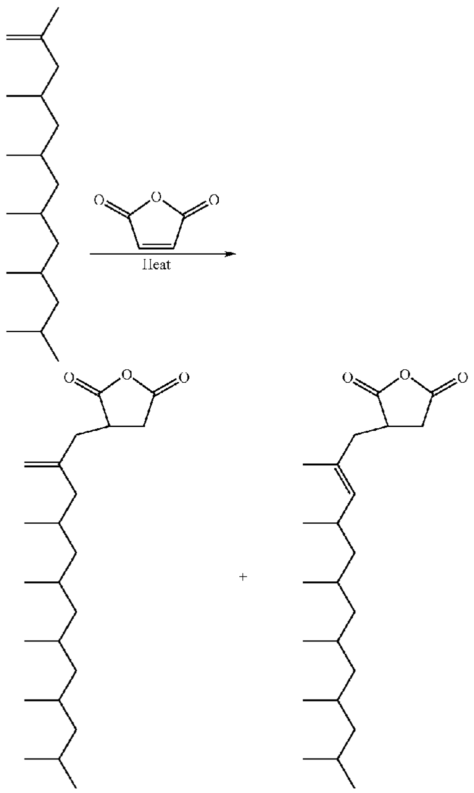


Any form of polypropylene may be used; for example syndiotactic, hemisyndiotactic, isotactic, hemiisotactic, and atactic polypropylene. The polypropylene may be made by a wide variety of transition metal catalysts.

Additional grafting of more maleic anhydride onto the above grafted polymers does not essentially affect the double bonds. All of the maleic anhydride is added to the backbone of the polypropylene. This is shown schematically below:

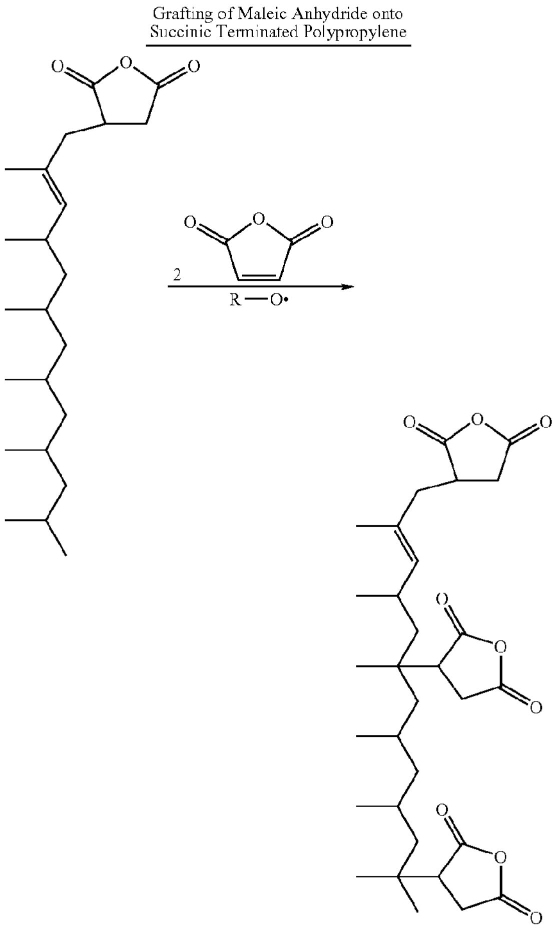


While levels of maleic anhydride incorporation below 5 weight percent are certainly possible, the described method herein facilitates the achieving of higher levels of total maleic anhydride incorporation, on the order of about 5 to about 45 weight percent, alternatively from about 10 to about 45 weight percent.

In one non-limiting embodiment of process, in the ene reaction, one molar equivalent of polypropylene (having a terminal unsaturation) is reacted with about one molar equivalent of maleic anhydride. Heating is applied, but this is generally simply enough necessary to make the polypropylene molten so that the reactants may be mixed.

In another non-restrictive embodiment of the process, in the further addition of maleic anhydride, the polypropylene having a terminal succinic anhydride moiety and a single unsaturation from the ene reaction is combined with additional maleic anhydride in the presence of free radical initiation. The free radical initiation may be any of the commonly used forms of free radical initiation including, but not necessarily limited to, peroxides, photoinitiation through ultraviolet radiation, gamma radiation, metal complexes and combinations thereof. In one non-limiting embodiment of the invention, the peroxide initiator is di-t-butyl peroxide.

When the further addition of maleic anhydride is performed neat, it is necessary to heat the mixture to at least a molten state to permit mixing of the reactants. The reaction temperature will depend on the radical source and polymer melting point and may range from about 60°C to about 200°C. Both steps of the process may be conducted at ambient pressure. Since maleic anhydride is volatile at higher temperatures, the reaction may be conducted in a sealed vessel.

In another non-restrictive embodiment of the process, the polypropylene having a terminal succinic anhydride moiety and a single unsaturation may be dissolved in a solvent and the heating during mixing may be reduced or eliminated. Suitable solvents for the polypropylene reactant include, but are not necessarily limited to, toluene, xylene, AROMATIC 100, N-alkyl Propionates, and mixtures thereof.

The molecular weight ($M_n$) of the product polypropylene substituted with maleic anhydride may range from about 500 up about 150,000 daltons, alternatively up to about 50,000 daltons, in another non-limiting embodiment up to about 10,000 daltons, and in another non-restrictive embodiment from 600 to about 5000 Daltons.

In one embodiment, the second functionalized polymer has a melting point in the range of 50 to 130° C; for example, 50 to 120°C, or 50 to 115°C, or 50 to 110°C, or 50 to 100° C.

In one embodiment, the second functionalized polyolefin is obtained by a process comprising (a) reacting a propylene/hexene copolymer having a terminal unsaturation with maleic anhydride in a mole ratio of 1:1 to produce

terminally succinic anhydride functionalized propylene/hexene copolymer having a terminal succinic anhydride moiety and a single unsaturation, and then (b) reacting the terminally succinic anhydride functionalized propylene/hexene copolymer having a terminal succinic anhydride moiety and a single unsaturation with additional maleic anhydride in the presence of free radical initiation to produce said second functionalized polyolefin, wherein said second functionalized polyolefin has a succinic anhydride substitution in the range of from 5 to 45 weight percent, based on the weight of second functionalized polyolefin.

Such functionalized polymers are further described in US patent application nos. 2006/0084764 and 2005/0203255, and US Patent No. 7,183,359.

### (3) Stabilizing Agent

The aqueous dispersion according to the present invention further comprises at least one or more stabilizing agents to promote the formation of a stable dispersion. The stabilizing agent may preferably be an external stabilizing agent. The aqueous dispersion of the instant invention comprises 1 to 50 percent by weight of one or more stabilizing agents, based on the total weight of the solid content of the dispersion. All individual values and subranges from 1 to 50 weight percent are included herein and disclosed herein; for example, the weight percent can be from a lower limit of 1, 3, 5, 10 weight percent to an upper limit of 15, 25, 35, 45, or 50 weight percent. For example, the aqueous dispersion may comprise from 1 to 25, or in the alternative from 1 to 35, or in the alternative from 1 to 40, or in the alternative from 1 to 45 percent by weight of one or more stabilizing agents, based on the total weight of the solid content of the aqueous dispersion. In selected embodiments, the stabilizing agent may be a surfactant, a polymer, or mixtures thereof. In certain embodiments, the stabilizing agent may be one or more second functionalized polymer compositions, as described hereinabove. In certain embodiments, the stabilizing agent can be a polar polymer, having a polar group as either a comonomer or grafted monomer. In exemplary embodiments, the stabilizing agent comprises one or more polar polyolefins, having a polar group as either a comonomer or grafted monomer. Exemplary polymeric stabilizing agents include, but are not limited to, ethylene-acrylic acid (EAA) and ethylene-methacrylic acid copolymers, such as those available under the trademarks PRIMACOR™, commercially available from The Dow Chemical Company, NUCREL™, commercially available from E.I. DuPont de Nemours, and ESCOR™, commercially available from ExxonMobil Chemical Company and described in U.S. Patent Nos. 4,599,392, 4,988,781, and 5,938,437. Other exemplary polymeric stabilizing agents include, but are not limited to, ethylene ethyl acrylate (EEA) copolymer, ethylene methyl methacrylate (EMMA), and ethylene butyl acrylate (EBA). Other ethylene-carboxylic acid copolymer may also be used. Those having ordinary skill in the art will recognize that a number of other useful polymers may also be used.

Other stabilizing agents that may be used include, but are not limited to, long chain fatty acids, fatty acid salts, or fatty acid alkyl esters having from 12 to 60 carbon atoms. In other embodiments, the long chain fatty acid or fatty acid salt may have from 12 to 40 carbon atoms.

The stabilizing agent as well as the functionalized polymer composition may each be partially or fully neutralized with a neutralizing agent. In certain embodiments, neutralization of the stabilizing agent and/or the functionalized polymer composition may be from 25 to 250 percent on a molar basis; or in the alternative, it may be from 50 to 110 percent on a molar basis. For example, the neutralizing agent may be a base, such as ammonium hydroxide or potassium hydroxide, for example. Other neutralizing agents can include lithium hydroxide or sodium hydroxide, for example. In another alternative, the neutralizing agent may, for example, be a carbonate. In another alternative, the neutralizing agent may, for example, be any amine such as monoethanolamine, or 2-amino-2-methyl-1-propanol (AMP). Amines useful in embodiments disclosed herein may include monoethanolamine, diethanolamine, triethanolamine, and TRIS AMINO (each available from Angus), NEUTROL TE (available from BASF), as well as triisopropanolamine, diisopropanolamine, and N,N-dimethylethanolamine (each available from The Dow Chemical Company, Midland, MI). Other useful amines may include ammonia, monomethylamine, dimethylamine, trimethylamine, monoethylamine, diethylamine, triethylamine, mono-n-propylamine, dimethyl-n propylamine, N-methanol amine, N-aminoethylethanolamine, N-methyldiethanolamine, monoisopropanolamine, N,N-dimethyl propanolamine, 2-amino-2-methyl-1-propanol, tris(hydroxymethyl)-aminomethane, N,N,N'N'-tetrakis(2-hydroxylpropyl) ethylenediamine, 1.2-diaminopropane. In some embodiments, mixtures of amines or mixtures of amines and surfactants may be used. Those having ordinary skill in the art will appreciate that the selection of an appropriate neutralizing agent depends on the specific composition formulated, and that such a choice is within the knowledge of those of ordinary skill in the art.

Additional stabilizing agents that may be useful in the practice of the present invention include, but are not limited to, cationic surfactants, anionic surfactants, or non-ionic surfactants. Examples of anionic surfactants include, but are not limited to, sulfonates, carboxylates, and phosphates. Examples of cationic surfactants include, but are not limited to, quaternary amines. Examples of non-ionic surfactants include, but are not limited to, block copolymers containing ethylene oxide and silicone surfactants. Stabilizing agents useful in the practice of the present invention can be either external surfactants or internal surfactants. External surfactants are surfactants that do not become chemically reacted into the base polymer during dispersion preparation. Examples of external surfactants useful herein include, but

are not limited to, salts of dodecyl benzene sulfonic acid and lauryl sulfonic acid salt. Internal surfactants are surfactants that do become chemically reacted into the base polymer during dispersion preparation. An example of an internal surfactant useful herein includes 2,2-dimethylol propionic acid and its salts. Additional surfactants that may be useful in the practice of the present invention include cationic surfactants, anionic surfactants, non-ionic surfactants, or combinations thereof. Various commercially available surfactants may be used in embodiments disclosed herein, including: OP-100 (a sodium stearate), OPK-1000 (a potassium stearate), and OPK-181 (a potassium oleate), each available from RTD Hallstar; UNICID 350, available from Baker Petrolite; DISPONIL FES 77-IS and DISPONIL TA-430, each available from Cognis; RHODAPEX CO-436, SOPROPHOR 4D384, 3D-33, and 796/P, RHODACAL BX-78 and LDS-22, RHODAFAC RE-610, and RM-710, and SUPRAGIL MNS/90, each available from Rhodia; and TRITON QS-15, TRITON W-30, DOWFAX 2A1, DOWFAX 3B2, DOWFAX 8390, DOWFAX C6L, TRITON X-200, TRITON XN-45S, TRITON H-55, TRITON GR-5M, TRITON BG-10, and TRITON CG-110, each available from The Dow Chemical Company, Midland, Michigan.

**(4) Fluid Medium**

The aqueous dispersion further comprises a fluid medium. The fluid medium may be any medium; for example, the fluid medium may be water. The dispersion of the instant invention comprises 35 to 85 percent by weight of fluid medium, based on the total weight of the dispersion. In particular embodiments, the water content may be in the range of from 35 to 80, or in the alternative from 35 to 75, or in the alternative from 45 to 65 percent by weight of the fluid medium, based on the total weight of the dispersion. Water content of the dispersion may preferably be controlled so that the solids content (base polymer plus stabilizing agent) is between about 1 percent to about 80 percent by weight. In particular embodiments, the solids range may be between about 10 percent to about 75 percent by weight. In other particular embodiments, the solids range is between about 20 percent to about 70 percent by weight. In certain other embodiments, the solids range is between about 25 percent to about 60 percent by weight.

**(5) Additional components**

The aqueous dispersion according to the present invention may further comprise optionally one or more binder compositions such as acrylic latex, vinyl acrylic latex, styrene acrylic latex, vinyl acetate ethylene latex, optionally, one or more other waterborne binder systems such a polyurethane dispersions , optionally one or more fillers; optionally one or more additives; optionally one or more pigments, e.g. titanium dioxide, mica, calcium carbonate, silica, zinc oxide, milled glass, aluminum trihydrate, talc, antimony trioxide, fly ash, and clay; optionally conductive fillers like carbon black; optionally one or more co-solvents, e.g. glycols, glycol ether such as Dowanol™ TPnB (Tripropylene Glycol n-Butyl Ether), DPnB (Dipropylene Glycol n-Butyl Ether), DPM (Dipropylene Glycol Methyl Ether), DPMA (Dipropylene Glycol Methyl Ether Acetate), PGDA (Propylene Glycol Diacetate), PM (Propylene Glycol Methyl Ether), PMA (Propylene Glycol Methyl Ether Acetate), PnB (Propylene Glycol n-Butyl Ether), PnP (Propylene Glycol n-Propyl Ether), PPh (Propylene Glycol Phenyl Ether), TPM (Tripropylene Glycol Methyl Ether), Proglyde DMM (Dipropylene Glycol Dimethyl Ether), Butyl Cellosolve, Butyl Carbitol, Butyl Carbitol Acetate, Hexyl Cellosolve, Hexyl Carbitol, all available from The Dow Chemical Company or other glycol ethers as available as trademark TEXANOL from ExxonMobil; other solvents such as toluene, xylene, AROMATIC100, N-propyl propionate, N-butyl propionate, N-pentyl propionate, mixtures thereof, and combinations thereof. Such solvents are commercially available, for example from ExxonMobil under the tradename AROMATIC 100, and from The Dow Chemical Company under the tradename UCAR N-Alkyl Propionates; others like 2,2,4-trimethyl-1,3-pentanediol monoisobutyrate, alcohols, mineral spirits, and benzoate esters;

Optionally one or more dispersants, e.g. aminoalcohols, and polycarboxylates; optionally one or more surfactants; optionally one or more anti-foaming agents e.g. under the tradename Surfynol by Air Products or Tego Foamex by Evonik or BYK by BYK or others or combinations thereof;; optionally one or more preservatives, e.g. biocides, mildewcides, fungicides, algaecides, and combinations thereof; optionally one or more thickeners, e.g. cellulosic based thickeners such as hydroxyethyl cellulose, hydrophobically modified alkali soluble emulsions (HASE thickeners such as UCAR POLYPHOBE TR-116) and hydrophobically modified ethoxylated urethane thickeners (HEUR); or optionally one or more additional neutralizing agents, e.g. hydroxides, amines, ammonia, and carbonates;

Optionally one or more wetting agents, for instance fluorosurfactants as available under the tradename TEGO from Evonik or Novec from 3M or Zonyl from DuPont or other hydrocarbon surfactants such as TRITON QS-15, TRITON W-30, DOWFAX 2A1, DOWFAX 3B2, DOWFAX 8390, DOWFAX C6L, TRITON X-200, TRITON XN-45S, TRITON H-55, TRITON GR-5M, TRITON BG-10, and TRITON CG-110, available by The Dow Chemical Company.

**(6) Additional Colorant Components**

Embodiments of the present invention may also employ a colorant as part of the aqueous dispersion. A variety

of colors may be used. Examples include colors such as yellow, magenta, and cyan. As a black coloring agent, carbon black, and a coloring agent toned to black using the yellow/magenta/cyan coloring agents shown below may be used. Colorants, as used herein, include dyes, pigments, and predispersions, among others. These colorants may be used singly, in a mixture, or as a solid solution. In various embodiments, pigments may be provided in the form of raw pigments, treated pigments, pre-milled pigments, pigment powders, pigment presscakes, pigment masterbatches, recycled pigment, and solid or liquid pigment predispersions. As used herein, a raw pigment is a pigment particle that has had no wet treatments applied to its surface, such as to deposit various coatings on the surface. Raw pigment and treated pigment are further discussed in PCT Publication No. WO 2005/095277 and U.S. Patent Application Publication No. 20060078485. In contrast, a treated pigment may have undergone wet treatment, such as to provide metal oxide coatings on the particle surfaces. Examples of metal oxide coatings include alumina, silica, and zirconia. Recycled pigment may also be used as the starting pigment particles, where recycled pigment is pigment after wet treatment of insufficient quality to be sold as coated pigment.

Exemplary colorant particles include, but are not limited to, pigments such as yellow coloring agent, compounds typified by a condensed azo compound, an isoindolynone compound, an anthraquinone compound, an azometal complex methine compound, and an allylamide compound as pigments may be used. As a magenta coloring agent, a condensed azo compound, a diketopyrrolopyrrole compound, anthraquinone, a quinacridone compound, a base dye lake compound, a naphthol compound, a benzimidazolone compound, a thioindigo compound, and a perylene compound may be used. As a cyan coloring agent, a copper phthalocyanine compound and its derivative, an anthraquinone compound, a base dye lake compound, and the like may be used.

## Forming the Aqueous Dispersion

The aqueous dispersion according to the present invention can be formed by any number of methods recognized by those having skill in the art. In one embodiment, one or more first functionalized polyolefins, optionally one or more second functionalized polyolefins, and one or more stabilizing agents, as described hereinabove, are melt-kneaded in an extruder along with water and optionally a neutralizing agent, such as ammonia, potassium hydroxide, or a combination of the two or more to form an aqueous dispersion. In another embodiment, one or more first functionalized polyolefins, optionally one or more second functionalized polyolefins are compounded, and then the compound is melt-kneaded in an extruder in the presence of a stabilizing agent, water, and optionally one or more neutralizing agents to form an aqueous dispersion. In some embodiments, the dispersion is first diluted to contain about 1 to about 5 percent by weight water and then, subsequently, further diluted to comprise greater than about 25 percent by weight water.

Any melt-kneading means known in the art may be used. In some embodiments, a kneader, a BANBURY® mixer, single-screw extruder, or a multi-screw extruder, e.g. a twin screw extruder, is used. A process for producing the aqueous dispersion in accordance with the present invention is not particularly limited. For example, an extruder, in certain embodiments, for example, a twin screw extruder, is coupled to a back pressure regulator, melt pump, or gear pump. Exemplary embodiments also provide a base reservoir and an initial water reservoir, each of which includes a pump. Desired amounts of base and initial water are provided from the base reservoir and the initial water reservoir, respectively. Any suitable pump may be used, but in some embodiments, for example, a pump that provides a flow of about 150 cc/min at a pressure of 240 bar is used to provide the base and the initial water to the extruder. In other embodiments, a liquid injection pump provides a flow of 300 cc/min at 200 bar or 600 cc/min at 133 bar. In some embodiments, the base and initial water are preheated in a preheater.

One or more first functionalized polyolefins, in the form of pellets, powder, or flakes, are fed from the feeder to an inlet of the extruder where the resin is melted or compounded. Optionally one or more second functionalized polyolefins are fed simultaneously with one or more first functionalized polyolefins into the extruder via the feeder; or in the alternative, one or more first functionalized polyolefins and optionally one or more second functionalized polyolefins are compounded, and then fed into the extruder via the feeder. In some embodiments, the stabilizing agent is added to one or more first functionalized polyolefins through and along with the one or more first functionalized polyolefins and in other embodiments, the stabilizing agent is provided separately to the twin screw extruder. The resin melt is then delivered from the mix and convey zone to an emulsification zone of the extruder where the initial amount of water and optional base from the water and base reservoirs are added through an inlet. In some embodiments, stabilizing agent may be added additionally or exclusively to the water stream. In some embodiments, further dilution water may be added via water inlet from water reservoir in a dilution and cooling zone of the extruder. Typically, the dispersion is diluted to at least 30 weight percent water in the cooling zone. In addition, the diluted mixture may be diluted any number of times until the desired dilution level is achieved. In some embodiments, water is not added into the twin screw extruder but rather to a stream containing the resin melt after the melt has exited from the extruder. In this manner, steam pressure build-up in the extruder is eliminated and the dispersion is formed in a secondary mixing device such as a rotor stator mixer.

In one embodiment, the present invention further provides a method for producing an adhesion promoter system comprising the steps of: (1) selecting at least 60 percent by weight of a first functionalized polyolefin, based on the total

weight of the solid content; (2) optionally selecting from 0.5 to less than 40 percent by weight of a second functionalized polyolefin, based on the total weight of the solid content, wherein said second functionalized polyolefin comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition; (3) selecting from 0.1 to less than 20 percent by weight of a stabilizing agent, based on the total weight of the solid content; (4) melt kneading said first functionalized polyolefin and optionally second functionalized polyolefin in the presence of said stabilizing agent, water and optionally one or more neutralizing agents, for example, at a temperature in the range of, from 25°C to 200°C; and (5) thereby forming said adhesion promoter system.

## End-use Applications

The adhesion promoter system of the present invention may be used, for example, in different coating applications, e.g. automotive coating applications, as an adhesion promoter for certain low surface energy plastic substrates such as thermoplastic polyolefins ("TPO").

The adhesion promoter system may be applied to one or more surfaces of a substrate, an article, or a structure via any method. Such methods include, but are not limited to, spraying, dipping, rolling, printing, and any other conventional technique generally known to those skilled in the art. The adhesion promoter system may be applied as coating to one or more surfaces of a substrate, an article, or a structure at a temperature in the range of greater than about 5°C; for example, in the range of 25°C to 400°C; or in the alternative, it can be used as a sizing agent for substrates such as glass fibers to produce glass fiber reinforced polypropylene or TPO, or to provide for adhesion between natural fibers and a PP or TPO substrate to enable reinforcement. Such substrates include, but are not limited to, thermoplastic polyolefins ("TPO"), and glass fiber reinforced polypropylene substrate or natural fiber reinforced PP or TPO. The inventive adhesion promoter system may be used as adhesion promoting layer for auto interior applications such as instrument panel, auto exterior applications such as bumpers, or other non automotive applications such as in packaging, toys, leisure, aquaculture, geotextiles, sporting goods, appliances, consumer electronics, furniture, marine, roofing membranes and toys.

Such coated substrates may further be coated with a topcoat, such as paint. The inventive adhesion promoter system is applied to one or more surfaces of a substrate, an article, or a structure, and then a topcoat is applied. The topcoat may be applied after an intermediate baking step, i.e. removing at least a portion of the water; or in the alternative, the topcoat may be applied without the intermediate baking step. In the alternative, the inventive adhesion promoter system is applied to one or more surfaces of a substrate, an article, or a structure, and then at least a portion of the water is removed before a topcoat is applied. A clear coat may further be applied after the topcoat is at least partially dried. In the alternative, the adhesion promoter system may be admixed with a topcoat, and then, the admixture may be applied to one or more surfaces of a substrate, an article, or a structure.

In one embodiment, the adhesion promoter system forms an adhesion layer, i.e. a film, which is associated with one or more surfaces of a substrate, an article, or a structure. The adhesion layer may have a thickness in the range of 1 to 30 μm; for example 5 to 15 μm.

In another alternative embodiment, a multilayer structure comprises: (a) at least one or more substrate layers; (b) at least one or more adhesion layers, wherein said one or more adhesion layers comprise a film derived from the adhesion promoter system; (c) at least one or more outer layers; wherein said adhesion layer is disposed therebetween said one or more substrate layers and said one or more outer layers.

In another alternative embodiment, the instant invention further provides a coating formulation comprising at least the adhesion promoter system, as described hereinabove.

In another alternative embodiment, the instant invention further provides a coating layer comprising a film derived from the coating formulation, as described hereinabove.

In another alternative embodiment, the instant invention further provides a multilayer structure comprising: (a) at least one or more substrate layers; (b) at least one or more coating layers comprising a film derived from the coating formulation, as described hereinabove; and (c) optionally one or more outer layers.

In another alternative embodiment, the instant invention further provides a process for making a multilayer structure comprising the steps: (1) selecting at least one or more substrate layers; (2) selecting the adhesion promoter system, as described hereinabove; (3) applying said adhesion promoter system to at least one surface of said substrate layer; (4) removing at least a portion of the water; (5) thereby forming an adhesion layer associated with said substrate layer; (6) forming at least one or more outer layers on said adhesion layer; and (7) thereby forming a multilayer structure.

In another alternative embodiment, the instant invention further provides a process for making a multilayer structure comprising the steps: (1) selecting at least one or more substrate layers; (2) selecting a coating formulation, as described hereinabove; (3) applying said coating formulation to at least one surface of said substrate layer; (4)

removing at least a portion of the water; (5) thereby forming a coating layer associated with said substrate layer; (6) optionally forming one or more outer layers on said coating layer; and (7) thereby forming a multilayer structure.

**Examples**

The following examples illustrate the present invention but are not intended to limit the scope of the invention.

**Preparation of the functionalized resin:**

**Functionalized Polyolefin *A: Functionalization in a batch mixer***

Functionalization runs are performed using a Thermo Haake Rheomix 3000, fitted with Banbury rotors. 250 g of Poly(propylene-co-ethylene) having 12 wt% ethylene content (VERSIFY™ 4301.05, from The Dow Chemical Company) is introduced into the preheated 379 $cm^3$ mixing chamber and is heated to 170 °C to obtain a polymer melt, while mixing at 30 rpm. Into the molten resin, 2.5 g (14.5 mmol) of the functionalized nitroxide 4-Hydroxy-2,2,6,6-tetramethylpiperidine-N-oxyl (4-hydroxy-TEMPO) is added and allowed to mix for 1 minute, followed by the addition of an organic peroxide Di(tert-butylperoxyisopropyl)benzene (Perkadox 14-40B-PD, from Akzo Nobel; 4.10 g, 40 wt% on a whiting carrier, 4.85 mmol). Mixing is continued for 6 minutes, after which the second addition of OH-TEMPO and the peroxide is melt blended into the melt blended product. Subsequently, further mixing takes place for approximately 30 minutes at 170 °C. It was then cooled and discharged from the mixer. The grafting level are determined using a high temperature 13C NMR analyzer (400 MHz, Bruker) equipped with a cryoprobe was 0.8 wt%.

**Functionalized Polyolefin *B: Functionalization in* a *Banbury-type batch mixer***

Functionalization runs are scaled into a Banbury-type internal batch mixer from Farrel Corp. (Type OOC) with nominal volume of 4.241, equipped with Banbury rotors. The temperature of the mixer is set at 100° C and the rotor speed at 140 rpm. 2.2 kg of Poly(propylene-co-ethylene), having 12 wt% ethylene content (VERSIFY™ 4301.05, from The Dow Chemical Company) is introduced into the preheated mixing chamber and is heated to 170 °C to obtain a polymer melt. After the polymer melt reaches the required processing temperature (170° C), 33 g of the the 4-Hydroxy-2,2,6,6-tetramethylpiperidine-N-oxyl is added, and then mixed for 1 minute, subsequently 56.3 g of peroxide Di(tert-butylperoxyisopropyl)benzene (Perkadox 14-40B-PD, from Akzo Nobel; 40 % active) is added to the melt blended product. The procedure is repeated and after a total mixing time of 1400 seconds, the product is discharged from the mixer into a pelletizing extruder. The grafting levels are determined using a high temperature 13C NMR analyzer (400 MHz, Bruker) equipped with a cryoprobe was 0.7 wt%.

**Preparation of Dispersions Via Extruder**

***Preparation of Inventive Dispersion 1***

Inventive dispersion 1 is prepared according to the following procedures based on the formulation components listed in Table I. The first functionalized polyolefin is an OH-grafted VERSIFY™ 4301.05 (Example B, above). The stabilizer is UNICIDTM 350, (C26 carboxylic acid) available from Baker Petrolite. Both of these materials are fed into a 25 mm diameter twin screw extruder by means of loss-in-weight or gravimetric feeders where they are forwarded and melted. The extruder temperature profile is 120°C prior to the addition of the initial water and DMEA, (dimethylethanolamine, 100%) (CAS No. 108-1-0), as the neutralizing agent, and subsequently, it is cooled down to a temperature below 100°C by the end of the extruder after the dilution water is added. The extruder speed is approximately 500 rpm. Amine base and water are mixed together and fed to the extruder at the initial water introduction point. The dilution water is fed via a second pump, and it is introduced into the dilution zone of the extruder. The initial water and dilution water streams are optionally pre-heated to the extruder temperature. At the extruder outlet, a back-pressure regulator is used to adjust to a suitable pressure inside the extruder barrel to prevent steam formation at the operating temperature. The resulting dispersions are cooled and filtered through a 200 micron filter.

***Preparation of Inventive Dispersions 2-4***

A Bersdorff ZE25 UTX extruder with 48 L/D rotating at 500 rpm is used to disperse the OH-grafted polymer resin (functionalized polyolefin B) in water with a stabilizer. The polymer resin is supplied to the feed throat of the extruder with a Schenck Mechatron loss-in-weight feeder. The stabilizer is either supplied to the feed throat by a Schenck Accurate volumetric feeder (dispersion 3 and 4) or delivered into the barrel after the water is added (dispersion 2). The solid

ingredients: first functionalized polyolefin, the second functionalized polyolefin and stabilizer are melted and mixed in the extruder. This phase is then combined with a quantity of water and optionally base or aqueous surfactant. The base reacts with the carboxylic acid functionality of the stabilizer if present or the maleic anhydride functionality of the second functionalized polyolefin if present. The melt blended product is then conveyed down the length of the extruder where it is combined with more water to is diluted to a final solids level of less than 60 wt %. The base (if present), initial water, aqueous surfactant (if present), and dilution water are all supplied by Isco dual syringe pumps (500 ml). The barrel temperature of the extruder is set to 150°C. After the dispersion exits the extruder it is cooled and filtered using a 200 μm mesh size bag filter.

***Preparation of Comparative Dispersion 1***

A Bersdorff ZE25 UTX extruder with 48 L/D rotating at 500 rpm is used to disperse the neat Versify 4301.05 (comparative dispersion 1) in water with a stabilizer. The polymer resin is supplied to the feed throat of the extruder with a Schenck Mechatron loss-in-weight feeder. The stabilizer is delivered into the barrel after the water is added. The polymer is melted, and then combined with a quantity of water and an aqueous surfactant (EMPICOL ESB), and subsequently, conveyed down the length of the extruder where it is combined with more water to dilute it down to a final solids level of less than 60 wt %. The initial water, aqueous surfactant, and dilution water are all supplied by Isco dual syringe pumps (500 ml). The barrel temperature of the extruder is set to 150C. After the dispersion exits the extruder, it is cooled and filtered using a 200 μm mesh size bag filter.

**Adhesion Promoter Performance Testing of the Dispersions**

**Coating Application for TPO**

Inventive Example 1-3, i.e. adhesion promoter systems including dispersion 1-3, as described above are further formulated by adding a wetting agent Tego wet (0.75 wt%). TPO substrate panels are thoroughly cleaned with isopropanol in an ultrasonic bath for 30 min. The adhesion promoter systems of Inventive Examples 1-3 are applied onto the TPO substrate using a Meyer rod to form a coated film having approximately 20 um thickness (wet film thickness) on one surface of each TPO substrates. The film is dried in an oven at 90°C for 15 minutes, and then different topcoats, as described below, are applied thereto to form a film having 50 μm thickness (wet film thickness) via a Meyer rod.

**Topcoat 1** is a solvent-based base coat (designated as BC, having a silver color and a solid content of approximately 37.0 wt %) was applied using a Meyer rod (50 μm wet film thickness). Upon solvent flash off, the coating layer was dried at 60°C for 30 minutes. Subsequently, a clear coat (CC, solids content 52.5 wt%) was applied using a Meyer rod (50 μm wet film thickness) and immediately dried at 60 °C during 30 minutes.

**Topcoat 2** is a aliphatic polyurethane dispersion (PUD) (WB) is applied using a Meyer rod (50 μm wet film thickness) and dried in the oven at 60°C for 30 minutes.

**Topcoat 3** is an acrylic based topcoat, which is applied using a Meyer rod (50 μm wet film thickness) and dried in the oven at 60°C during 30 minutes.

Adhesion performance of the coated specimen was determined via cross hatch test according to ASTM D 3359-09 B (0 indicates no adhesion while 5B indicates excellent level of adhesion), and the results are reported in Table 3.

**Test Methods**

Test methods include the following:

The concentration of maleic anhydride is determined (via Fourier Transform Infrared Spectroscopy (FTIR) Analysis) by the ratio of peak heights of the maleic anhydride at wave number 1791 $cm^{-1}$ to the polymer reference peak. Maleic anhydride content is calculated by multiplying this ratio with the appropriate calibration constant. The equation used for maleic grafted polyolefins has the following form.

$$\text{MAH (wt.\%)} = A * \{[\text{FTIR PeakArea@ 1791 cm}^{-1}]/[\text{ FTIR PeakArea 2019 cm}^{-1}] + B* [\text{FTIR PeakArea@ 1712 cm}^{-1}]/[\text{ FTIR_PeakArea@ 2019 cm}^{-1}]\} \qquad \text{(Eqn. 1)}$$

The calibration constant A can be determined using C13 NMR standards. The actual calibration constant may differ slightly depending on the instrument and polymer. The second component at wave number 1712 $cm^{-1}$ accounts for the presence of maleic acid, which is negligible for freshly grafted material. Over time however, maleic anhydride is readily converted to maleic acid in the presence of moisture. Depending on surface area, significant hydrolysis can occur

in just a few days under ambient conditions. The acid has a distinct peak at wave number 1712 $cm^{-1}$. The constant B in Equation 1 is a correction for the difference in extinction coefficients between the anhydride and acid groups.

The sample preparation procedure begins by making a pressing, typically 0.05 to 0.15 millimeters in thickness, in a heated press, between two protective films, at 150-180°C for 1 hour. Mylar and Teflon are suitable protective films to protect the sample from the platens. Aluminum foil must never be used (maleic anhydride reacts with aluminum). Platens should be under pressure (~10 ton) for about 5 minutes. The sample is allowed to cool to room temperature, placed in an appropriate sample holder, and then scanned in the FTIR. A background scan should be run before each sample scan or as needed. The precision of the test is good with an inherent variability of less than ± 5%. Samples should be stored with desiccant to prevent excessive hydrolysis. Moisture content in the product has been measured as high as 0.1 weight percent. The conversion of anhydride to acid however is reversible with temperature but may take up to one week for complete version. The reversion is best performed in a vacuum oven at 150°C a good vacuum (near 30 inches Hg) is required. If the vacuum is less than adequate the sample tends to oxidize resulting in an infrared peak at approximately 1740 $cm^{-1}$ which will cause the values to below. Maleic anhydride and acid are represented by peaks at about 1791 and 1712 $cm^{1}$, respectively.

Average particle size diameter was measured by a Beckman Coulter LS230 particle size analyzer with a Small Volume Module used as the sample delivery system. The software version utilized is Version 3.29. Hardware and software can be obtained from Beckman Coulter Inc., Miami, Florida.

The analysis conditions for all measurements utilizes a fluid refractive index of 1.332, a sample real refractive index of 1.5, and a sample imaginary refractive index of 0.0. The extended optical model is not employed. The polarization intensity differential scattering (PIDS) option is activated and used to generate the particle size information. The average particle size diameter is measured and reported in μm.

**Table 1**

| Dispersion | First Functionalized Polyolefin | Second Functionalized Polyolefin | Non-Functionalized Polyolefin | Stabilizer (S) | Ratio P/S | Neutralizing base | Neutralization Level |
|---|---|---|---|---|---|---|---|
| Comparative Dispersion | --- | --- | VERSIFY 4301 | EMPICOL ESB | 94.2/5.8 | none | n/a |
| Inventive Dispersion 1 | OHgrafted VERSIFY 4301 | --- | --- | Unicid 350 | 95.5/4.5 | DMEA | 200% |
| Inventive Dispersion 2 | OHgrafted VERSIFY 4301 | --- | --- | EMPICOL ESB | 94.2/5.8 | none | n/a |
| Inventive Dispersion 3 | OHgrafted VERSIFY 4301 | BHX-10016 | --- | --- | 70/30 | DMEA | 220% |
| Inventive Disperison 4 | OHgrafted VERSIFY 4301 | BHX-10016 | --- | PRIMACOR 5980 | 70/15/15 | DMEA | 135% |

VERSIFY 4301 is a propylene - ethylene copolymer available from The Dow Chemical Company with a melt flow rate of 25 g/10 min at 230C and a melting point of 62C.
OHgrafted VERSIFY 4301 is prepared from the VERSIFY 4301 as described above.
BHX-10016 is a maleic anhydride - polypropylene copolymer available from Baker Petrolite with an acid number of 60 mg KOH /g polymer, a Mw of 2500 and a melting point of 120C.
EMPICOL ESB is 70% Na-Lauryl Ether Sulfate in water available from Huntsman.
Unicid 350 is a C23-C26 carboxylic acid with an acid number of 115 mg KOH/g polymer available from Baker Petrolite PRIMACOR 5980i is an ethylene - acrylic acid copolymer available from The Dow Chemical Company with an acid number of 155 mg KOH/g polymer, a melt index of 300 g/10 min at 190C and a melting point of 77C.
DMEA (dimethylethanolamine) is available from Fisher Scientific.

**Table 2**

| Dispersion | Volume Mean μm) | pH | Viscosity | % solids |
|---|---|---|---|---|
| Comparative Example 1 | 1.32 | 8.38 | 284 cP | 51.08% |
| Inventive Dispersion 1 | 2.73 | 9.83 | 126 cP | 48.50% |
| Inventive Dispersion 2 | 0.41 | 8.89 | 464 cP | 50.22% |
| Inventive Dispersion 3 | 2.83 | 10.13 | 70 cP | 37.73% |
| Inventive Disperison 4 | 0.45 | 9.88 | 372 cP | 44.49% |

**Table 3**

| Example | Topcoat 1 | Topcoat 2 | Topcoat 3 |
|---|---|---|---|
| Comparative Dispersion | 0B | 0B | 0B |
| Inventive Dispersion 1 | 5B | 2/3B | 5B |
| Inventive Dispersion 2 | 5B | 2/3B | 3/4B |
| Inventive Dispersion 3 | 5B | 5B | 5B |
| Inventive Dispersion 4 | 5B | 5B | 5B |
| *Adhesion rating: 0 - no adhesion, 5 - excellent adhesion* | | | |

## Claims

**1.** An adhesion promoter system comprising an aqueous dispersion comprising the melt kneading product of:

at least 60 percent by weight of a first functionalized polyolefin, based on the total weight of the solid content, wherein the first functionalized polyolefin is an amine and/or hydroxyl functionalized polyolefin prepared via an *in-situ* melt reaction;
optionally from 0.5 to less than 40 percent by weight of a second functionalized polyolefin, based on the total weight of the solid content, wherein said second functionalized polyolefin comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition;
from 0.1 to less than 20 percent by weight of a stabilizing agent, based on the total weight of the solid content; and in the presence of water and optionally one or more neutralizing agents; and
wherein said dispersion has an average particle size diameter in the range of from 0.05 to 5 μm, and a pH in the range of from 8 to 11.

**2.** A method for producing an adhesion promoter system comprising the steps of:

selecting at least 60 percent by weight of a first functionalized polyolefin, based on the total weight of the solid content, wherein the first functionalized polyolefin is an amine and/or hydroxyl functionalized polyolefin prepared via an *in-situ* melt reaction;
optionally selecting from 0.5 to less than 40 percent by weight of a second functionalized polyolefin, based on the total weight of the solid content, wherein said second functionalized polyolefin comprises homopolymers of propylene or copolymers of propylene with hexene, octene and/or other like alpha- olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition;
optionally selecting from 0.1 to less than 20 percent by weight of a stabilizing agent, based on the total weight of the solid content; melt kneading said first functionalized polyolefin and optionally second functionalized polyolefin in the presence of said optional stabilizing agent, water and optionally one or more neutralizing agents; and thereby forming said adhesion promoter system; and
wherein said dispersion has an average particle size diameter in the range of from 0.05 to 5 μm, and a pH in the range of from 8 to 11.

**3.** An adhesion layer comprising a film derived from the adhesion promoter system of Claim 1.

**4.** A multilayer structure comprising:

at least one or more substrate layers;
at least one or more adhesion layers, wherein said one or more adhesion layers comprise a film derived from the adhesion promoter system of Claim 1;
at least one or more outer layers;
wherein said adhesion layer is disposed therebetween said one or more substrate layers and said one or more outer layers.

**5.** A process for making a multilayer structure comprising the steps:

selecting at least one or more substrate layers;
selecting the adhesion promoter system of Claim 1;
applying said adhesion promoter system to at least one surface of said substrate layer;
removing at least a portion of the water;
thereby forming an adhesion layer associated with said substrate layer;
forming at least one or more outer layers on said adhesion layer; and thereby forming a multilayer structure.

**6.** Any one of Claims 1-5, wherein first functionalized polyolefin comprises a propylene/ethylene copolymer having a crystallinity (measured with DSC) in the range of from 1 percent by weight to 30 percent by weight, a heat of fusion in the range of from 2 Joules/gram to 50 Joules/gram), and a DSC melting point in the range of 25°C to 110°C.

**7.** Any one of Claims 1-6, wherein said adhesion promoter system further comprises one or more fillers, one or more binders, one or more pigments, one or more rheology modifier.

**8.** Any one of Claims 1-7, wherein said second functionalized polyolefin is obtained by a process comprising (a) reacting a propylene/hexene copolymer having a terminal unsaturation with maleic anhydride in a mole ratio of 1 : 1 to produce terminally succinic anhydride functionalized propylene/hexene copolymer having a terminal succinic anhydride moiety and a single unsaturation, and then (b) reacting the terminally succinic anhydride functionalized propylene/hexene copolymer having a terminal succinic anhydride moiety and a single unsaturation with additional maleic anhydride in the presence of free radical initiation to produce said functionalized polymer composition, wherein said functionalized polymer composition has a succinic anhydride substitution in the range of from 5 to 45 weight percent, based on the weight of functionalized polymer composition.

**9.** A coating composition comprising the adhesion promoter system of claim 1-5, wherein said coating composition comprises at least 1 percent by weight of the adhesion promoter system.

**10.** A multilayer structure comprising:

at least one or more substrate layers;
at least one or more coating layers, wherein said one or more coating layers comprises a film derived from a formulated composition comprising the adhesion promoter system and optionally other components and additives.

## Patentansprüche

**1.** Ein Haftvermittlersystem, beinhaltend eine wässrige Dispersion, beinhaltend das Schmelzknetprodukt von:

zu mindestens 60 Gewichtsprozent, bezogen auf das Gesamtgewicht des Feststoffgehalts, einem ersten funktionalisierten Polyolefin, wobei das erste funktionalisierte Polyolefin ein amin- und/oder hydroxylfunktionalisiertes Polyolefin ist, das über eine *In-situ*-Schmelzreaktion hergestellt wird;
optional zu 0,5 bis weniger als 40 Gewichtsprozent, bezogen auf das Gesamtgewicht des Feststoffgehalts, einem zweiten funktionalisierten Polyolefin, wobei das zweite funktionalisierte Polyolefin Homopolymere von Propylen oder Copolymere von Propylen mit Hexen, Octen und/oder anderen ähnlichen alpha-Olefinen beinhaltet, wobei die Homopolymere oder Copolymere eine einzelne Ungesättigtheit, einen terminalen Bernsteinsäureanhydridanteil und zusätzliche Bernsteinsäureanhydridsubstitutionen an der Polypropylenhauptkette aufweisen, wobei die Bernsteinsäureanhydridsubstitution in dem Bereich von etwa 5 bis etwa 45 Gewichtsprozent der Zusammensetzung funktionalisierten Polymers liegt;
zu 0,1 bis weniger als 20 Gewichtsprozent, bezogen auf das Gesamtgewicht des Feststoffgehalts, einem Stabilisierungsmittel; und
in Gegenwart von Wasser und optional einem oder mehreren Neutralisierungsmitteln; und
wobei die Dispersion einen durchschnittlichen Partikelgrößendurchmesser in dem Bereich von 0,05 bis 5 μm und einen pH-Wert in dem Bereich von 8 bis 11 aufweist.

**2.** Ein Verfahren zum Produzieren eines Haftvermittlersystems, beinhaltend die folgenden Schritte:

Auswählen von mindestens 60 Gewichtsprozent, bezogen auf das Gesamtgewicht des Feststoffgehalts, von einem ersten funktionalisierten Polyolefin, wobei das erste funktionalisierte Polyolefin ein amin- und/oder hydroxylfunktionalisiertes Polyolefin ist, das über eine *In-situ*-Schmelzreaktion hergestellt wird;
optional Auswählen von 0,5 bis weniger als 40 Gewichtsprozent, bezogen auf das Gesamtgewicht des Feststoffgehalts, von einem zweiten funktionalisierten Polyolefin, wobei das zweite funktionalisierte Polyolefin Homopolymere von Propylen oder Copolymere von Propylen mit Hexen, Octen und/oder anderen ähnlichen alpha-Olefinen beinhaltet, wobei die Homopolymere oder Copolymere eine einzelne Ungesättigtheit, einen terminalen Bernsteinsäureanhydridanteil und zusätzliche Bernsteinsäureanhydridsubstitutionen an der Polypropylenhauptkette aufweisen, wobei die Bernsteinsäureanhydridsubstitution in dem Bereich von etwa 5 bis etwa 45 Gewichtsprozent der Zusammensetzung funktionalisierten Polymers liegt;
optional Auswählen von 0,1 bis weniger als 20 Gewichtsprozent, bezogen auf das Gesamtgewicht des Feststoffgehalts, von einem Stabilisierungsmittel; Schmelzkneten des ersten funktionalisierten Polyolefins und optional zweiten funktionalisierten Polyolefins in Gegenwart des optionalen Stabilisierungsmittels, Wassers und optional eines oder mehrerer Neutralisierungsmittel; und
dadurch Bilden des Haftvermittlersystems; und
wobei die Dispersion einen durchschnittlichen Partikelgrößendurchmesser in dem Bereich von 0,05 bis 5 μm und einen pH-Wert in dem Bereich von 8 bis 11 aufweist.

**3.** Eine Haftschicht, beinhaltend einen von dem Haftvermittlersystem gemäß Anspruch 1 stammenden Film.

**4.** Eine Mehrschichtstruktur, beinhaltend:

mindestens eine oder mehrere Substratschichten;
mindestens eine oder mehrere Haftschichten, wobei die eine oder die mehreren Haftschichten einen von dem Haftvermittlersystem gemäß Anspruch 1 stammenden Film beinhalten;
mindestens eine oder mehrere äußere Schichten;
wobei die Haftschicht zwischen der einen oder den mehreren Substratschichten und der einen oder den mehreren äußeren Schichten angeordnet ist.

**5.** Ein Prozess zum Anfertigen einer Mehrschichtstruktur, der die folgenden Schritte beinhaltet:

Auswählen mindestens einer oder mehrerer Substratschichten;
Auswählen des Haftvermittlersystems gemäß Anspruch 1;
Auftragen des Haftvermittlersystems auf mindestens eine Oberfläche der Substratschicht;
Entfernen von mindestens einem Teil des Wassers;
dadurch Bilden einer mit der Substratschicht verbundenen Haftschicht;
Bilden mindestens einer oder mehrerer äußerer Schichten auf der Haftschicht; und
dadurch Bilden einer Mehrschichtstruktur.

**6.** Einer der Ansprüche 1-5, wobei das erste funktionalisierte Polyolefin ein Propylen/Ethylen-Copolymer mit einer Kristallinität (gemessen mit DSC) in dem Bereich von 1 Gewichtsprozent bis 30 Gewichtsprozent, einer Schmelzwärme in dem Bereich von 2 Joule/Gramm bis 50 Joule/Gramm und einem DSC-Schmelzpunkt in dem Bereich von

25 °C bis 110 °C beinhaltet.

**7.** Einer der Ansprüche 1-6, wobei das Haftvermittlersystem ferner einen oder mehrere Füllstoffe, ein oder mehrere Bindemittel, ein oder mehrere Pigmente, einen oder mehrere Rheologiemodifikatoren beinhaltet.

**8.** Einer der Ansprüche 1-7, wobei das zweite funktionalisierte Polyolefin durch einen Prozess erhalten wird, der Folgendes beinhaltet: (a) Reagierenlassen eines Propylen/Hexen-Copolymers, das eine terminale Ungesättigtheit aufweist, mit Maleinsäureanhydrid in einem Molverhältnis von 1 : 1 zum Produzieren von terminal mit Bernsteinsäureanhydrid funktionalisiertem Propylen/Hexen-Copolymer, das einen terminalen Bernsteinsäureanhydridanteil und eine einzelne Ungesättigtheit aufweist, und dann (b) Reagierenlassen des terminal mit Bernsteinsäureanhydrid funktionalisierten Propylen/Hexen-Copolymers, das einen terminalen Bernsteinsäureanhydridanteil und eine einzelne Ungesättigtheit aufweist, mit zusätzlichem Maleinsäureanhydrid in Gegenwart von Radikalinitüerung zum Produzieren der Zusammensetzung funktionalisierten Polymers, wobei die Zusammensetzung funktionalisierten Polymers eine Bernsteinsäureanhydridsubstitution in dem Bereich von 5 bis 45 Gewichtsprozent, bezogen auf das Gewicht der Zusammensetzung funktionalisierten Polymers, aufweist.

**9.** Eine Beschichtungszusammensetzung, die das Haftvermittlersystem gemäß Anspruch 1-5 beinhaltet, wobei die Beschichtungszusammensetzung zu mindestens 1 Gewichtsprozent das Haftvermittlersystem beinhaltet.

**10.** Eine Mehrschichtstruktur, beinhaltend:

mindestens eine oder mehrere Substratschichten;
mindestens eine oder mehrere Beschichtungsschichten, wobei die eine oder die mehreren Beschichtungsschichten einen Film beinhalten, der von einer formulierten Zusammensetzung, die das Haftvermittlersystem und optional andere Komponenten und Zusatzstoffe beinhaltet, stammt.

**Revendications**

**1.** Un système de promoteur d'adhésion comprenant une dispersion aqueuse comprenant le produit de malaxage à l'état fondu :

d'au moins 60 pour cent en poids d'une première polyoléfine fonctionnalisée, rapporté au poids total de la teneur en solides, la première polyoléfine fonctionnalisée étant une polyoléfine fonctionnalisée par une amine et/ou un hydroxyle préparée par l'intermédiaire d'une réaction à l'état fondu in-situ ;
facultativement de 0,5 à moins de 40 pour cent en poids d'une deuxième polyoléfine fonctionnalisée, rapporté au poids total de la teneur en solides, ladite deuxième polyoléfine fonctionnalisée comprenant des homopolymères de propylène ou des copolymères de propylène avec de l'hexène, de l'octène et/ou d'autres alpha-oléfines similaires, les homopolymères ou copolymères ayant une insaturation unique, un groupement anhydride succinique terminal, et des substitutions anhydride succinique supplémentaires sur le squelette polypropylène, où la substitution anhydride succinique est comprise dans la gamme allant d'environ 5 à environ 45 pour cent en poids de la composition de polymère fonctionnalisée ;
de 0,1 à moins de 20 pour cent en poids d'un agent stabilisant, rapporté au poids total de la teneur en solides ; et en présence d'eau et facultativement d'un ou de plusieurs agents de neutralisation ; et dans lequel ladite dispersion a un diamètre de taille de particule moyenne compris dans la gamme allant de 0,05 à 5 μm, et un pH compris dans la gamme allant de 8 à 11.

**2.** Une méthode pour produire un système de promoteur d'adhésion comprenant les étapes consistant :

à sélectionner au moins 60 pour cent en poids d'une première polyoléfine fonctionnalisée, rapporté au poids total de la teneur en solides, la première polyoléfine fonctionnalisée étant une polyoléfine fonctionnalisée par une amine et/ou un hydroxyle préparée par l'intermédiaire d'une réaction à l'état fondu in-situ ;
à sélectionner facultativement de 0,5 à moins de 40 pour cent en poids d'une deuxième polyoléfine fonctionnalisée, rapporté au poids total de la teneur en solides, ladite deuxième polyoléfine fonctionnalisée comprenant des homopolymères de propylène ou des copolymères de propylène avec de l'hexène, de l'octène et/ou d'autres alpha-oléfines similaires, les homopolymères ou copolymères ayant une insaturation unique, un groupement anhydride succinique terminal, et des substitutions anhydride succinique supplémentaires sur le squelette polypropylène, où la substitution anhydride succinique est comprise dans la gamme allant d'environ 5 à environ

45 pour cent en poids de la composition de polymère fonctionnalisée ;
à sélectionner facultativement de 0,1 à moins de 20 pour cent en poids d'un agent stabilisant, rapporté au poids total de la teneur en solides ; à malaxer à l'état fondu ladite première polyoléfine fonctionnalisée et facultativement ladite deuxième polyoléfine fonctionnalisée en présence dudit agent stabilisant facultatif, d'eau et facultativement d'un ou de plusieurs agents de neutralisation ; et
à former de ce fait ledit système de promoteur d'adhésion ; et
dans laquelle ladite dispersion a un diamètre de taille de particule moyenne compris dans la gamme allant de 0,05 à 5 μm, et un pH compris dans la gamme allant de 8 à 11.

**3.** Une couche d'adhésion comprenant un film dérivé du système de promoteur d'adhésion de la revendication 1.

**4.** Une structure multicouche comprenant :

au moins une ou plusieurs couches de substrat ;
au moins une ou plusieurs couches d'adhésion, lesdites une ou plusieurs couches d'adhésion comprenant un film dérivé du système de promoteur d'adhésion de la revendication 1 ;
au moins une ou plusieurs couches externes ;
dans laquelle ladite couche d'adhésion est disposée entre lesdites une ou plusieurs couches de substrat et lesdites une ou plusieurs couches externes.

**5.** Un procédé pour réaliser une structure multicouche comprenant les étapes consistant :

à sélectionner au moins une ou plusieurs couches de substrat ;
à sélectionner le système de promoteur d'adhésion de la revendication 1 ;
à appliquer ledit système de promoteur d'adhésion sur au moins une surface de ladite couche de substrat ;
à éliminer au moins une partie de l'eau ;
à former de ce fait une couche d'adhésion associée à ladite couche de substrat ;
à former au moins une ou plusieurs couches externes sur ladite couche d'adhésion ; et
à former de ce fait une structure multicouche.

**6.** L'une quelconque des revendications 1 à 5, la première polyoléfine fonctionnalisée comprenant un copolymère de propylène/éthylène ayant une cristallinité (mesurée grâce à une analyse DSC) comprise dans la gamme allant de 1 pour cent en poids à 30 pour cent en poids, une chaleur de fusion comprise dans la gamme allant de 2 Joules/gramme à 50 Joules/gramme, et un point de fusion DSC compris dans la gamme de 25 °C à 110 °C.

**7.** L'une quelconque des revendications 1 à 6, ledit système de promoteur d'adhésion comprenant en outre une ou plusieurs charges, un ou plusieurs liants, un ou plusieurs pigments, un ou plusieurs modificateurs de rhéologie.

**8.** L'une quelconque des revendications 1 à 7, ladite deuxième polyoléfine fonctionnalisée étant obtenue par un procédé comprenant (a) le fait de faire réagir un copolymère de propylène/hexène ayant une insaturation terminale avec de l'anhydride maléique en un rapport molaire de 1/1 afin de produire un copolymère de propylène/hexène fonctionnalisé par de l'anhydride succinique de façon terminale ayant un groupement anhydride succinique terminal et une insaturation unique, puis (b) le fait de faire réagir le copolymère de propylène/hexène fonctionnalisé par de l'anhydride succinique de façon terminale ayant un groupement anhydride succinique terminal et une insaturation unique avec de l'anhydride maléique supplémentaire en présence d'une initiation radicalaire afin de produire ladite composition de polymère fonctionnalisée, ladite composition de polymère fonctionnalisée ayant une substitution anhydride succinique comprise dans la gamme allant de 5 à 45 pour cent en poids, rapporté au poids de la composition de polymère fonctionnalisée.

**9.** Une composition de revêtement comprenant le système de promoteur d'adhésion de la revendication 1 à 5, ladite composition de revêtement comprenant au moins 1 pour cent en poids du système de promoteur d'adhésion.

**10.** Une structure multicouche comprenant :

au moins une ou plusieurs couches de substrat ;
au moins une ou plusieurs couches de revêtement, lesdites une ou plusieurs couches de revêtement comprenant un film dérivé d'une composition formulée comprenant le système de promoteur d'adhésion et facultativement d'autres constituants et additifs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3231619 A
- US 4612335 A
- US 4888446 A
- US 3645992 A, Elston
- US 5272236 A
- US 5278272 A
- US 6054544 A
- US 6335410 B
- US 6723810 B
- US 4076698 A, Anderson
- EP 0129368 A
- EP 0260999 A
- US 4701432 A
- US 4937301 A
- US 4935397 A
- US 5055438 A
- WO 9007526 A
- US 5504172 A
- WO 0001745 A
- US 6960635 B
- US 6525157 B
- US 988999 P
- US 08082599 W
- WO 2005090427 A
- US 376835 A
- US 20060084764 A
- US 20050203255 A
- US 7183359 B
- US 4599392 A
- US 4988781 A
- US 5938437 A
- WO 2005095277 A
- US 20060078485 A


### Non-patent literature cited in the description


- **RANDALL.** *Rev. Micromole. Chem. Phys.,* vol. C29 (2&3), 285-297
- **ZIMM, B.H. ; STOCKMAYER, W.H.** *J. Chem. Phys.,* 1949, vol. 17, 1301
- **RUDIN, A.** Modern Methods of Polymer Characterization. John Wiley & Sons, 1991, 103-112
- *CHEMICAL ABSTRACTS,* 108-1-0